# EUROPEAN PATENT APPLICATION

(11) **EP 3 291 597 A1**
(43) Date of publication of application: **07.03.2018**
(21) Application number: 16786284.6
(22) Date of filing: 07.04.2016
(51) Int. Cl.: H04W 28/04, H04J 11/00, H04W 72/04

(54) **TERMINAL DEVICE, BASE STATION DEVICE, COMMUNICATION METHOD, AND INTEGRATED CIRCUIT**

(30) Priority: 28.04.2015 JP 2015090914
(71) Applicant: Sharp Kabushiki Kaisha, Sakai City, Osaka 590-8522 (JP)
(72) Inventor: SUZUKI Shoichi, Osaka 590-8522 (JP); AIBA Tatsushi, Osaka 590-8522 (JP); YOKOMAKURA Kazunari, Osaka 590-8522 (JP); TAKAHASHI Hiroki, Osaka 590-8522 (JP)
(74) Representative: Müller-Boré & Partner Patentanwälte PartG mbB
(86) International application number: PCT/JP2016/061380
(87) International publication number: WO 2016/175007

(57) **Abstract**

A terminal monitors a PDCCH, and controls a first HARQ process related to uplink transmission, a second HARQ process related to downlink transmission, a first HARQ RTT timer for the first HARQ process, a second HARQ RTT timer for the second HARQ process, a first retransmission timer for the first HARQ process, and a second retransmission timer for the second HARQ process. For each sub-frame, the terminal starts the first retransmission timer in a case that the first HARQ RTT timer expires in a given sub-frame, irrespective of whether data of the first HARQ process is successfully decoded; starts the second retransmission timer in a case that the second HARQ RTT timer expires in a given sub-frame and data of the second HARQ process is not successfully decoded; and monitors the PDCCH during an Active Time that includes the running period of the first retransmission timer or the second retransmission timer.

## Description

### TECHNICAL FIELD

The present invention relates to a terminal device, a base station device, a communication method, and an integrated circuit.

This application claims priority based on JP 2015-090914 filed on April 28, 2015, the contents of which are incorporated herein by reference.

### BACKGROUND ART

In the 3rd Generation Partnership Project (3GPP), a radio access method and a radio network for cellular mobile communication (hereinafter referred to as "Long Term Evolution (LTE)", "Evolved Universal Terrestrial Radio Access (EUTRA)", or "Evolved Universal Terrestrial Radio Access Network (EUTRAN)") have been considered. In LTE, a base station device is also referred to as an evolved NodeB (eNodeB), and a terminal device is also referred to as User Equipment (UE). LTE is a cellular communication system in which multiple areas each covered by the base station device are deployed to form a cellular structure. A single base station device may manage multiple cells.

LTE supports a Time Division Duplex (TDD). LTE that employs the TDD scheme is also referred to as TD-LTE or LTE TDD. In TDD, uplink signals and downlink signals are time division multiplexed. Furthermore, LTE supports a Frequency Division Duplex (FDD).

LTE provides a Hybrid Automatic Repeat reQuest (HARQ) functionality in a Medium Access Control (MAC) layer. The HARQ functionality in the downlink has asynchronous adaptive HARQ characteristics, and the HARQ functionality in the uplink has synchronous HARQ characteristics (NPL 1). Introduction of the asynchronous HARQ in the uplink has been considered in the 3GPP (NPL 2).

### CITATION LIST

### [Non-Patent Document]

[NON-PATENT DOCUMENT 1] "3GPP TS 36.300 v12.4.0 Evolved Universal Terrestrial Radio Access (E-UTRA) and Evolved Universal Terrestrial Radio Access Network (E-UTRAN); Overall description; Stage 2", 7th November 2015.
[NON-PATENT DOCUMENT 2] "UL HARQ considerations for LTE LAA", R2-151551, NVIDIA, 3GPP TSG RAN WG2 Meeting #89bis, 20th - 24th April 2015.

### DISCLOSURE OF THE INVENTION

### Problems to be Solved by the Invention

However, a concrete method for introducing the asynchronous HARQ in the uplink has not been fully considered. For example, a method for switching between the synchronous HARQ and the asynchronous HARQ in the uplink has not been fully considered. Further, for example, a method for identifying a HARQ process related to an uplink grant has not been fully considered. Moreover, for example, a method for processing a HARQ buffer has not been fully considered. Moreover, for example, discontinuous reception (DRX) related to the asynchronous HARQ has not been fully considered.

The present invention provides a terminal device capable of efficiently communicating with a base station device, an integrated circuit mounted on the terminal device, a communication method used by the terminal device, the base station device communicating with the terminal device, a communication method used by the base station device, and an integrated circuit mounted on the base station device.

### Means for Solving the Problems

(1) Aspects of the present invention provide the following measures. According to a first aspect of the present invention, a terminal device configured to perform discontinuous reception includes a reception unit configured to monitor a physical downlink control channel and a MAC layer processing unit configured to control a first Hybrid Automatic Repeat reQuest (HARQ) process related to uplink transmission, a second HARQ process related to downlink transmission, a first HARQ Round Trip Time (RTT) timer for the first HARQ process, a second HARQ RTT timer for the second HARQ process, a first retransmission timer for the first HARQ process, and a second retransmission timer for the second HARQ process. An asynchronous HARQ is applied to the first HARQ process and the second HARQ process, and for each subframe, the terminal device starts the first retransmission timer irrespective of whether data of the first HARQ process is successfully decoded, in a case that the first HARQ RTT timer expires in a given subframe; starts the second retransmission timer for each subframe in a case that the second HARQ RTT timer expires in a given subframe and data of the second HARQ process is not successfully decoded; and monitors the physical downlink control channel for each subframe during an Active Time including a period in which either the first retransmission timer or the second retransmission timer is running.
(2) According to a second aspect of the present invention, a communicating method for a terminal device configured to perform discontinuous reception includes the steps of monitoring a physical downlink control channel, and controlling a first Hybrid Automatic Repeat reQuest (HARQ) process related to uplink transmission, a second HARQ process related to downlink transmission, a first HARQ Round Trip Time (RTT) timer for the first HARQ process, a second HARQ RTT timer for the second HARQ process, a first retransmission timer for the first HARQ process, and a second retransmission timer for the second HARQ process. An asynchronous HARQ is applied to the first HARQ process and the second HARQ process, and for each subframe, the first retransmission timer is started irrespective of whether data of the first HARQ process is successfully decoded, in a case that the first HARQ RTT timer expires in a given subframe; the second retransmission timer is started in a case that the second HARQ RTT timer expires in a given subframe and data of the second HARQ process is not successfully decoded; and the physical downlink control channel is monitored during an Active Time including a period in which either the first retransmission timer or the second retransmission timer is running.
(3) According to a third aspect of the present invention, an integrated circuit mounted on a terminal device configured to perform discontinuous reception includes a reception circuit configured to monitor a physical downlink control channel, and a MAC layer processing circuit configured to control a first Hybrid Automatic Repeat reQuest (HARQ) process related to uplink transmission, a second HARQ process related to downlink transmission, a first HARQ Round Trip Time (RTT) timer for the first HARQ process, a second HARQ RTT timer for the second HARQ process, a first retransmission timer for the first HARQ process, and a second retransmission timer for the second HARQ process. An asynchronous HARQ is applied to the first HARQ process and the second HARQ process. For each subframe, the first retransmission timer is started irrespective of whether data of the first HARQ process is successfully decoded in a case that the first HARQ RTT timer expires in a given subframe; the second retransmission timer is started in a case that the second HARQ RTT timer expires in a given subframe and data of the second HARQ process is not successfully decoded; and the physical downlink control channel is monitored during an Active Time including a period in which the first retransmission timer or the second retransmission timer is running.

### Effects of the Invention

According to the present invention, the terminal device is capable of efficiently communicating with the base station device.

### BRIEF DESCRIPTION OF THE DRAWINGS

FIG. 1 is a conceptual diagram of a radio communication system according to the present embodiment.
FIG. 2 is a diagram illustrating an example of a MAC layer structure in an uplink for which carrier aggregation is configured, according to the present embodiment.
FIG. 3 is a diagram illustrating an example of a Downlink Control Information (DCI) format 0 according to the present embodiment.
FIG. 4 is a diagram illustrating a schematic structure of a radio frame according to the present embodiment.
FIG. 5 is a table showing examples of UL-DL configurations according to the present embodiment.
FIG. 6 is a diagram illustrating an example of a synchronous HARQ according to the present embodiment.
FIG. 7 is a diagram illustrating an example of an asynchronous HARQ according to the present embodiment.
FIG. 8 is a table showing an example of the number of HARQ processes that are managed in parallel by a HARQ entity related to a TDD serving cell, according to the present embodiment.
FIG. 9 is a table showing another example of the number of the HARQ processes that are managed in parallel by the HARQ entity related to the TDD serving cell, according to the present embodiment.
FIG. 10 is a diagram illustrating a first example of a method for switching between the synchronous HARQ and the asynchronous HARQ, according to the present embodiment.
FIG. 11 is a diagram illustrating a second example of the method for switching between the synchronous HARQ and the asynchronous HARQ, according to the present embodiment.
FIG. 12 is a diagram illustrating a third example of the method for switching between the synchronous HARQ and the asynchronous HARQ, according to the present embodiment.
FIG. 13 is a diagram illustrating fourth example of the method for switching between the synchronous HARQ and the asynchronous HARQ, according to the present embodiment.
FIG. 14 is a diagram illustrating an example of a random access response according to the present embodiment.
FIG. 15 is a diagram illustrating examples of extended MAC RARs according to the present embodiment.
FIG. 16 is a diagram illustrating an example of a DRX cycle according to the present embodiment.
FIG. 17 is a flow chart illustrating an example of a DRX operation according to the present embodiment.
FIG. 18 is a flow chart illustrating the example of the DRX operation according to the present embodiment.
FIG. 19 is a diagram illustrating an example of DRX according to the present embodiment.

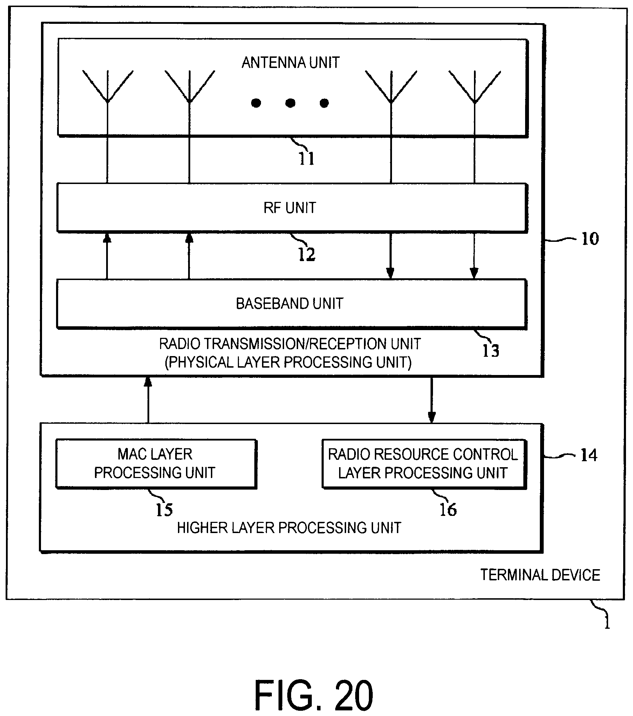

FIG. 20 is a schematic block diagram illustrating a structure of a terminal device 1 according to the present embodiment.

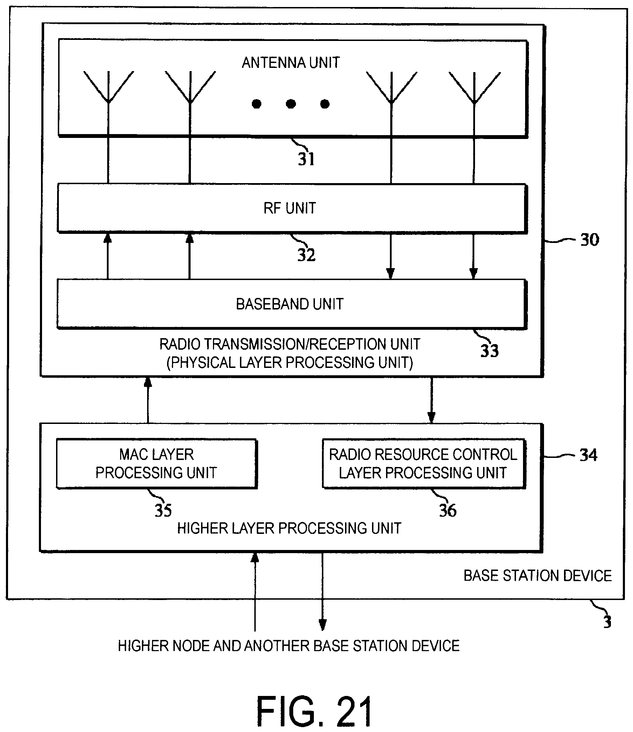

FIG. 21 is a schematic block diagram illustrating a structure of a base station device 3 according to the present embodiment.

### MODE FOR CARRYING OUT THE INVENTION

Embodiments of the present invention will be described below.

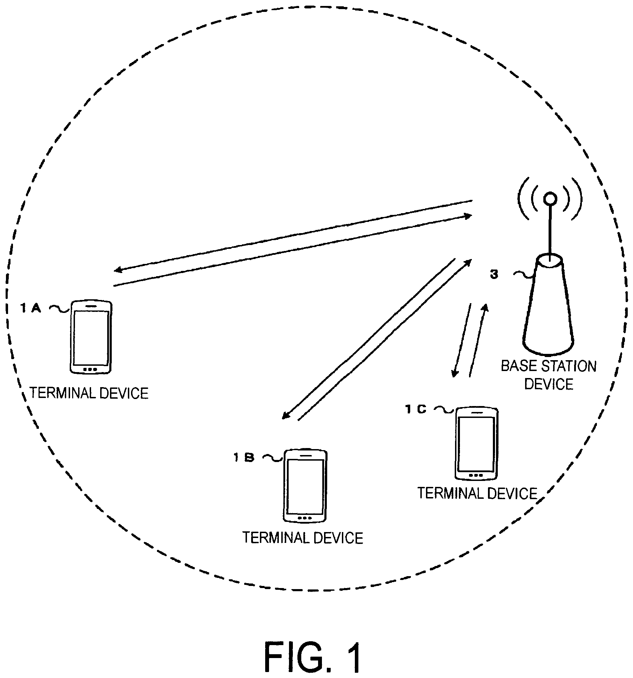

FIG. 1 is a conceptual diagram of a radio communication system according to the present embodiment. In FIG. 1, the radio communication system includes terminal devices 1A to 1C and a base station device 3. Hereinafter, the terminal devices 1A to 1C are collectively referred to as a terminal device 1.

Now, carrier aggregation will be described.

In the present embodiment, multiple serving cells are configured for the terminal device 1. A technique for the terminal device 1 to communicate via the multiple serving cells is referred to as cell aggregation or carrier aggregation. The present invention may be applied to each of the multiple serving cells configured for the terminal device 1. Furthermore, the present invention may be applied to some of the multiple configured serving cells. Furthermore, the present invention may be applied to each of groups of the multiple configured serving cells. Furthermore, the present invention may be applied to some of the groups of the multiple configured serving cells. In carrier aggregation, such multiple configured serving cells are also referred to as aggregated serving cells.

Time Division Duplex (TDD) and/or Frequency Division Duplex (FDD) is applied to the radio communication system according to the present embodiment. For the cell aggregation, the FDD may be applied to all of the multiple serving cells. For the cell aggregation, the TDD may be applied to all of the multiple serving cells. Alternatively, for the cell aggregation, serving cells to which the TDD is applied and serving cells to which the FDD is applied may be aggregated.

Such multiple configured serving cells include one primary cell and one or multiple secondary cells. The primary cell is a cell on which an initial connection establishment procedure is executed, a cell on which a connection re-establishment procedure is initiated, or a cell indicated as a primary cell in a handover procedure. The secondary cell(s) may be configured/added at a point in time when or after a Radio Resource Control (RRC) connection is established.

In the downlink, a carrier corresponding to a serving cell is referred to as a downlink component carrier. In the uplink, a carrier corresponding to a serving cell is referred to as an uplink component carrier. The downlink component carrier and the uplink component carrier are collectively referred to as a component carrier. In the FDD, the uplink component carrier and the downlink component carrier correspond to respective different carrier frequencies. In the TDD, the uplink component carrier and the downlink component carrier correspond to the same carrier frequency.

The terminal device 1 is capable of performing simultaneous transmission and/or reception on multiple physical channels on multiple serving cells (component carriers). A single physical channel is transmitted on one serving cell (component carrier) of the multiple serving cells (component carriers).

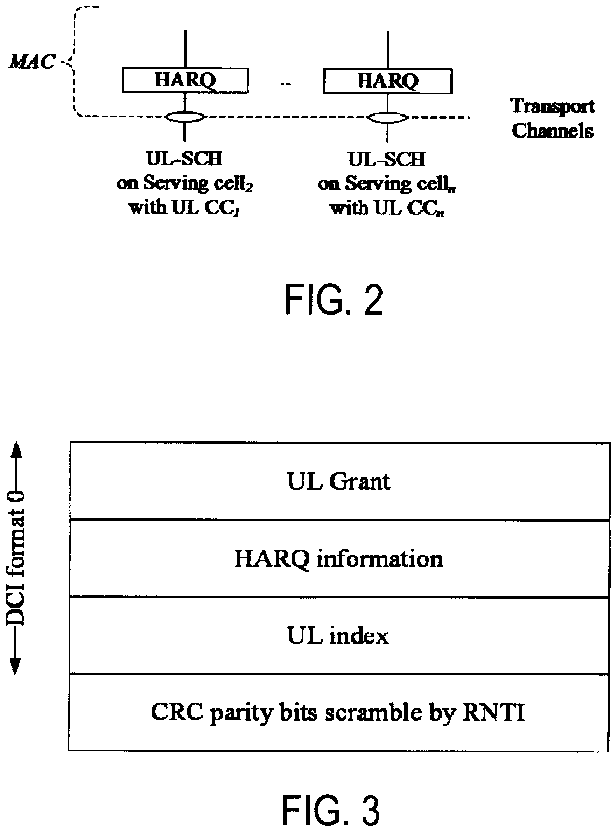

FIG. 2 illustrates an example of the MAC layer structure in the uplink for which carrier aggregation is configured, according to the present embodiment. In the uplink for which carrier aggregation is configured, one independent HARQ entity is provided for each serving cell (uplink component carrier). The HARQ entity manages multiple HARQ processes simultaneously. The HARQ process is associated with a HARQ buffer. Accordingly, the HARQ entity is associated with multiple HARQ buffers. The HARQ processes store MAC layer data in the HARQ buffers. The HARQ processes instruct a physical layer to transmit the MAC layer data.

In the uplink for which carrier aggregation is configured, at least one transport block is created for each serving cell per Transmission Time Interval (TTI). Each transport block and HARQ retransmission of the transport block are mapped to one serving cell. In LTE, TTI corresponds to a subframe. The transport block corresponds to the MAC layer data to be transmitted on an uplink shared channel (UL-SCH).

In the uplink according to the present embodiment, a "transport block", a "MAC Protocol Data Unit (PDU)", "MAC layer data", a "UL-SCH", "UL-SCH data", and "uplink data" denote the same constituent element.

Physical channels and physical signals according to the present embodiment will be described below.

In the uplink radio communication from the terminal device 1 to the base station device 3, the following uplink physical channels are used. The uplink physical channels are used for transmission of information output from higher layers.
- Physical Uplink Control Channel (PUCCH)
- Physical Uplink Shared Channel (PUSCH)
- Physical Random Access Channel (PRACH)

The PUCCH is used for transmission of Uplink Control Information (UCI). The Uplink Control Information includes downlink Channel State Information (CSI), a Scheduling Request (SR) used for a request of a PUSCH (Uplink-Shared Channel (UL-SCH)) resource to be used for the initial transmission, and a Hybrid Automatic Repeat request ACKnowledgement (HARQ-ACK) for the downlink data (Transport block, a Medium Access Control Protocol Data Unit (MAC PDU), a Downlink-Shared Channel (DL-SCH), and a Physical Downlink Shared Channel (PDSCH)). The HARQ-ACK indicates an acknowledgement (ACK) or a negative-acknowledgement (NACK). The HARQ-ACK is also referred to as an ACK/NACK, HARQ feedback, a HARQ response, or HARQ control information.

The Scheduling Request includes a positive scheduling request or a negative scheduling request. The positive scheduling request indicates a request for a UL-SCH resource to be used for the initial transmission. The negative scheduling request indicates no request for a UL-SCH resource to be used for the initial transmission.

The PUSCH is used for transmission of uplink data (Uplink-Shared Channel (UL-SCH)). Furthermore, the PUSCH may be used for transmission of the HARQ-ACK and/or Channel State Information along with the uplink data. Further, the PUSCH may be used only for transmission of the Channel State Information. Moreover, the PUSCH may be used only for transmission of the HARQ-ACK and the Channel State Information.

Here, the base station device 3 and the terminal device 1 exchange (transmit/receive) signals with each other in their respective higher layers. For example, the base station device 3 and the terminal device 1 may transmit/receive Radio Resource Control (RRC) signaling in their respective RRC layers. Further, the base station device 3 and the terminal device 1 may transmit/receive a Medium Access Control (MAC) CE in their respective MAC layers. Here, the RRC signaling and/or the MAC CE is also referred to as higher layer signaling. The RRC signaling and/or the MAC CE are included in a transport block.

In the present embodiment, the "RRC signaling", "RRC layer information", an "RRC layer signal", an "RRC layer parameter", an "RRC message", and an "RRC information element" denote the same constituent element.

The PUSCH is used for transmission of the RRC signaling and the MAC CE. Here, the RRC signaling transmitted from the base station device 3 may be signaling common to multiple terminal devices 1 in a cell. Further, the RRC signaling transmitted from the base station device 3 may be dedicated to a given terminal device 1 (also referred to as dedicated signaling). In other words, user-equipment-specific information (unique to user equipment) is transmitted on the signaling dedicated to the given terminal device 1.

The PRACH is used for transmission of a random access preamble. The PRACH is used to indicate an initial connection establishment procedure, a handover procedure, a connection re-establishment procedure, uplink transmission synchronization (timing adjustment), and a PUSCH (UL-SCH) resource request.

The following uplink physical signal is used in the uplink radio communication. The uplink physical signal is not used for transmission of information output from higher layers, but is used by the physical layer.
- Uplink Reference Signal (UL RS)

The following downlink physical channels are used for downlink radio communication from the base station device 3 to the terminal device 1. The downlink physical channels are used for transmission of information output from higher layers.
- Physical Broadcast Channel (PBCH)
- Physical Control Format Indicator Channel (PCFICH)
- Physical Hybrid automatic repeat request Indicator Channel (PHICH)
- Physical Downlink Control Channel (PDCCH)
- Enhanced Physical Downlink Control Channel (EPDCCH)
- Physical Downlink Shared Channel (PDSCH)
- Physical Multicast Channel (PMCH)

The PBCH is used for broadcasting a Master Information Block (MIB), or a Broadcast Channel (BCH), that is shared by the terminal devices 1.

The PCFICH is used for transmission of information indicating a region (OFDM symbols) to be used for transmission of the PDCCH.

The PHICH is used for transmission of a HARQ indicator (HARQ feedback or response information) indicating an ACKnowledgement (ACK) or a Negative ACKnowledgement (NACK) for the uplink data (Uplink Shared Channel (UL-SCH)) received by the base station device 3.

The PDCCH and the EPDCCH are used for transmission of Downlink Control Information (DCI). For convenience, in the present embodiment, the "PDCCH" is assumed to include an "EPDCCH". The Downlink Control Information is also referred to as a DCI format. The Downlink Control Information transmitted on a single PDCCH includes a downlink grant and HARQ information, or an uplink grant and HARQ information. The downlink grant is also referred to as a downlink assignment or a downlink allocation. The downlink assignment and uplink grant are not transmitted together on a single PDCCH.

FIG. 3 is a diagram illustrating an example of the DCI format 0 according to the present embodiment. The DCI format 0 includes an uplink grant and the HARQ information. The DCI format 0 for a serving cell for which an uplink-downlink configuration (UL-DL configuration) 0 is configured may include an UL index field. The UL index indicates a subframe for which the PUSCH transmission scheduled in accordance with the DCI format 0 is adjusted. The UL index includes a first bit and a second bit. The terminal device 1 adjusts the PUSCH transmission for a first subframe in a case that "1" is set to the first bit of the UL index. The terminal device 1 adjusts the PUSCH transmission for a second subframe in a case that "1" is set to the second bit of the UL index. The terminal device 1 adjusts the PUSCH transmission for both the first and second subframes in a case that "1" is set to both the first and second bits of the UL index.

The downlink assignment is used for scheduling of a single PDSCH in a single cell. The downlink assignment is used for scheduling of a PDSCH in a subframe in which the downlink grant has been transmitted.

The uplink grant is used for scheduling of a single PUSCH in a single cell. The uplink grant is used for scheduling of a single PUSCH in a subframe located behind a subframe in which the uplink grant has been transmitted.

The HARQ information includes a New Data Indicator (NDI) and information indicating a transport block size. The HARQ information together with the downlink assignment transmitted on the PDCCH also includes information indicating the number of a HARQ process in the downlink (downlink HARQ process Identifier/Identity, downlink HARQ process number). The HARQ information together with the uplink grant related to an asynchronous HARQ transmitted on the PDCCH may also include information indicating the number of a HARQ process in the uplink (uplink HARQ process Identifier/Identity, uplink HARQ process number). The HARQ information together with the uplink grant related to a synchronous HARQ transmitted on the PDCCH need not include information indicating the number of a HARQ process in the uplink (uplink HARQ process Identifier/Identity, uplink HARQ process number).

The NDI indicates the initial transmission or retransmission. A HARQ entity instructs a given HARQ process to trigger the initial transmission, in a case that an NDI provided to a given HARQ process via the HARQ information is toggled from the value of an NDI for the previous transmission in the given HARQ process. The HARQ entity instructs a given HARQ process to trigger retransmission, in a case that an NDI provided to the given HARQ process through the HARQ information is not toggled from the value of an NDI for the previous transmission in the given HARQ process. The HARQ process may determine whether the NDI is toggled.

The HARQ entity identifies a HARQ process related to an uplink grant and HARQ information, and delivers the uplink grant and the HARQ information to the identified HARQ process. The HARQ process stores the uplink grant and the HARQ information delivered from the HARQ entity.

Cyclic Redundancy Check (CRC) parity bits added to the downlink control information transmitted on a single PDCCH is scrambled by a Cell-Radio Network Temporary Identifier (C-RNTI), a Semi Persistent Scheduling (SPS) C-RNTI, or a Temporary C-RNTI. The C-RNTI and the SPS C-RNTI are identifiers for identifying a terminal device in a cell. The Temporary C-RNTI is an identifier for identifying the terminal device 1, which has transmitted a random access preamble in a contention based random access procedure.

The C-RNTI and the Temporary C-RNTI are used for control of PDSCH transmission or PUSCH transmission in a single subframe. The SPS C-RNTI is used for periodic allocation of the resource for the PDSCH or the PUSCH.

The PDSCH is used for transmission of downlink data (Downlink Shared Channel (DL-SCH)).

The PMCH is used for transmission of multicast data (Multicast Channel (MCH)).

The following downlink physical signals are used in the downlink radio communication. The downlink physical signals are not used for transmission of information output from the higher layers, but are used by the physical layer.
- Synchronization signal (SS)
- Downlink Reference Signal (DL RS)

The Synchronization signal is used for the terminal device 1 to be synchronized to frequency and time domains in the downlink. In the TDD scheme, the Synchronization signal is mapped to subframes 0, 1, 5, and 6 within a radio frame. In the FDD scheme, the Synchronization signal is mapped to subframes 0 and 5 within a radio frame.

The Downlink Reference Signal is used for the terminal device 1 to perform channel compensation on a downlink physical channel. The Downlink Reference Signal is used for the terminal device 1 to calculate the downlink Channel State Information.

According to the present embodiment, the following five types of Downlink Reference Signals are used.
- Cell-specific Reference Signal (CRS)
- UE-specific Reference Signal (URS) associated with the PDSCH
- Demodulation Reference Signal (DMRS) associated with the EPDCCH
- Non-Zero Power Chanel State Information-reference signal (NZP CSI-RS)
- Zero Power Chanel State Information-Reference Signal (ZP CSI-RS)
- Multimedia Broadcast and Multicast Service over Single Frequency Network Reference signal (MBSFN RS)
- Positioning Reference Signal (PRS)

The downlink physical channels and the downlink physical signals are collectively referred to as downlink signals. The uplink physical channels and the uplink physical signals are collectively referred to as uplink signals. The downlink physical channels and the uplink physical channels are collectively referred to as physical channels. The downlink physical signals and the uplink physical signals are collectively referred to as physical signals.

The BCH, the MCH, the UL-SCH, and the DL-SCH are transport channels. Channels used in the Medium Access Control (MAC) layer are referred to as transport channels. A unit of the transport channel used in the MAC layer is also referred to as a transport block (TB) or a MAC Protocol Data Unit (PDU). A Hybrid Automatic Repeat reQuest (HARQ) is controlled for each transport block in the MAC layer. The transport block is a unit of data that the MAC layer delivers to the physical layer. In the physical layer, the transport block is mapped to a codeword and subject to coding processing on a codeword-by-codeword basis.

The structure of a radio frame in the present embodiment will be described below.

LTE supports two types of radio frame structures. The two types of radio frame structures include a frame structure type 1 and a frame structure type 2. The frame structure type 1 is applicable to the FDD. The frame structure type 2 is applicable to the TDD.

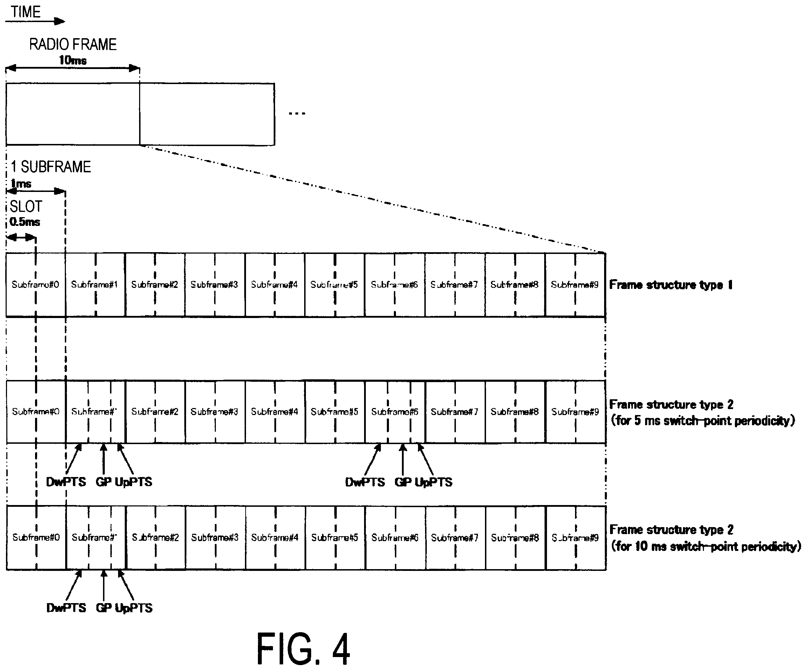

FIG. 4 is a diagram illustrating the schematic structure of the radio frame according to the present embodiment. In FIG. 4, the horizontal axis is a time axis. Each of the type 1 and type 2 radio frames is 10 ms in length and is defined as 10 subframes. Each of the subframes is 1 ms in length and is defined as two consecutive slots. Each of the slots is 0.5 ms in length. The i-th subframe within a radio frame is constituted of the (2 × i)-th slot and the (2 × i + 1)-th slot.

The following three types of subframes are defined for the frame structure type 2.
- Downlink subframe
- Uplink subframe
- Special subframe

The downlink subframe is a subframe reserved for downlink transmission. The uplink subframe is a subframe reserved for uplink transmission. The special subframe is constituted of three fields. The three fields include a Downlink Pilot Time Slot (DwPTS), a Guard Period (GP), and an Uplink Pilot Time Slot (UpPTS). The sum of the lengths of the DwPTS, the GP, and the UpPTS is 1 ms. The DwPTS is a field reserved for downlink transmission. The UpPTS is a field reserved for uplink transmission. The GP is a field in which neither downlink transmission nor uplink transmission is performed. Moreover, the special subframe may be constituted of only the DwPTS and the GP, or may be constituted of only the GP and the UpPTS.

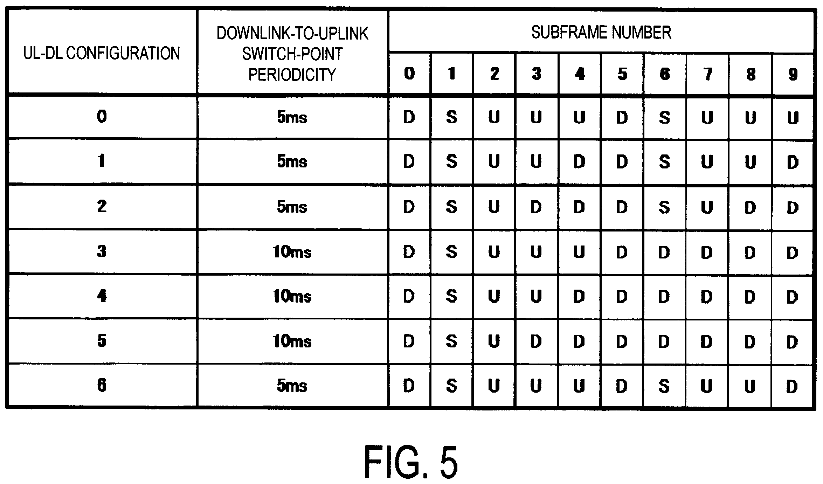

The radio frame of the frame structure type 2 is constituted of at least downlink subframes, uplink subframes, and a special subframe(s). The constitution of the radio frame of the frame structure type 2 is indicated by the uplink-downlink configuration (UL-DL configuration). The terminal device 1 receives information indicating the UL-DL configuration from the base station device 3. FIG. 5 is a table showing examples of UL-DL configurations according to the present embodiment. In FIG. 5, D denotes a downlink subframe, U denotes an uplink subframe, and S denotes a special subframe.

A synchronous HARQ in the uplink will be described below.

For the synchronous HARQ, a HARQ process related to an uplink grant is associated with a subframe in which the uplink grant has been received and/or a subframe in which a PUSCH (UL-SCH) corresponding to the uplink grant is transmitted. The terminal device 1 determines, in the synchronous HARQ, a HARQ process related to an uplink grant from the subframe in which the uplink grant has been received and/or the subframe in which the PUSCH (UL-SCH) corresponding to the uplink grant is transmitted.

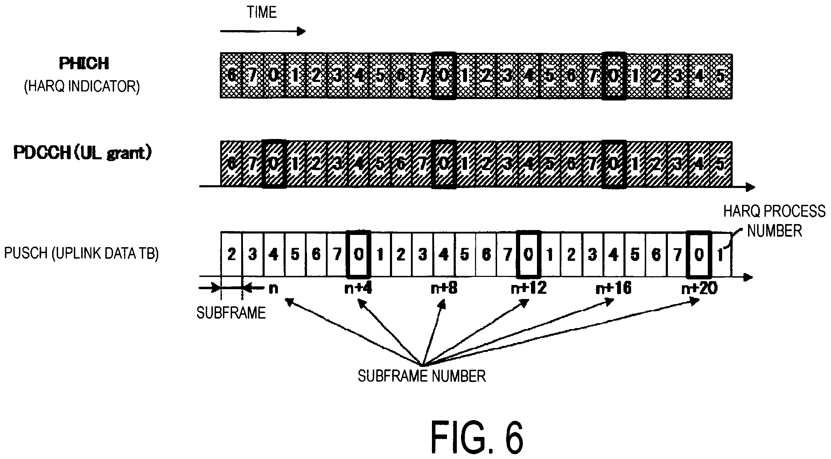

FIG. 6 is a diagram illustrating an example of the synchronous HARQ according to the present embodiment. In FIG. 6, one subframe is related to one HARQ process. In FIG. 6, the numerals in boxes indicate respective HARQ process numbers. For the synchronous HARQ, the HARQ entity determines a HARQ process from the subframe in which the MAC layer data is transmitted or from the subframe in which the DCI format 0 for the MAC layer data has been detected.

In FIG. 6, a subframe in which the MAC layer data corresponding to the UL grant is transmitted is determined from the subframe in which the UL grant has been received. For example, the MAC layer data corresponding to the UL grant is transmitted on a PUSCH in the fourth subframe from the subframe in which the UL grant has been received.

For the synchronous HARQ, a HARQ indicator is transmitted on a PHICH in response to uplink transmission. The relation between the subframe in which uplink transmission has been executed and the subframe in which the corresponding PHICH is transmitted is predetermined. For example, a HARQ indicator for MAC layer data is transmitted on a PHICH in the fourth subframe from the subframe in which the MAC layer data has been transmitted on the PUSCH. Furthermore, for example, MAC layer data is retransmitted on a PUSCH in the fourth subframe from the subframe in which NACK has been received on a PHICH.

An asynchronous HARQ in the uplink will be described below.

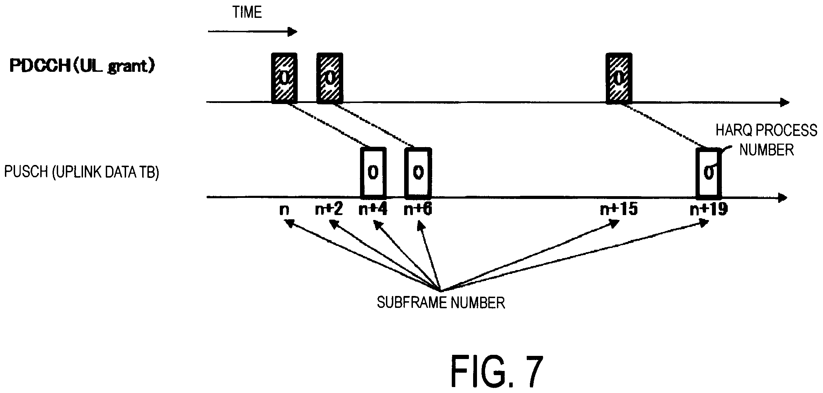

FIG. 7 is a diagram illustrating an example of the asynchronous HARQ according to the present embodiment. In FIG. 7, one subframe is related to one HARQ process. In FIG. 7, the numeral in the boxes indicates a corresponding HARQ process number. For the asynchronous HARQ, a HARQ entity determines a HARQ process from HARQ information (information indicating a HARQ process number) included in the DCI format 0. For the asynchronous HARQ, a HARQ indicator is not transmitted on a PHICH in response to the uplink transmission. In other words, for the asynchronous HARQ, retransmission of MAC layer data is always scheduled via the PDCCH.

In FIG. 7, a subframe in which MAC layer data corresponding to an UL grant is transmitted is determined from the subframe in which the UL grant has been received. For example, the MAC layer data corresponding to the UL grant is transmitted on a PUSCH in the fourth subframe from the subframe in which the UL grant has been received.

In a case that the DCI format 0 includes the UL index, the DCI format may include two pieces of information indicating a HARQ process. In a case that the DCI format 0 includes the UL index, and both the first and second bits in the UL index are set to "1", one of the two HARQ processes indicated by the two pieces of information indicating the numbers of the HARQ processes may be related to the first subframe for which PUSCH transmission is adjusted, and the other one of the two HARQ processes indicated by the two pieces of information indicating the numbers of the HARQ processes may be related to the second subframe.

In a case that the DCI format 0 includes the UL index, the DCI format may include one piece of information indicating a HARQ process. In a case that the DCI format 0 includes the UL index, and both the first bit and the second bit in the UL index are set to "1", one HARQ process indicated by one piece of information indicating the number of the HARQ process may be related to both the first subframe and the second subframe for each of which the PUSCH transmission is adjusted.

In a case that the DCI format 0 includes the UL index in which both the first bit and the second bit are set to "1", a HARQ process X indicated by HARQ information (information indicating the number of a HARQ process) may be related to the first subframe and a HARQ process Y determined by the HARQ process X may be related to the second subframe: where, X and Y may have a relation of Y = (X + 1) mod Z, and where, Z denotes the number of HARQ processes that are managed in parallel by a HARQ entity.

The number Z of HARQ processes that are managed in parallel by one HARQ process will be described below.

One HARQ entity related to a FDD serving cell manages eight HARQ processes in parallel. The information, included in the DCI format 0, which indicates the number of a HARQ process for a FDD serving cell to which the asynchronous HARQ is applied may be 3 bits in length.

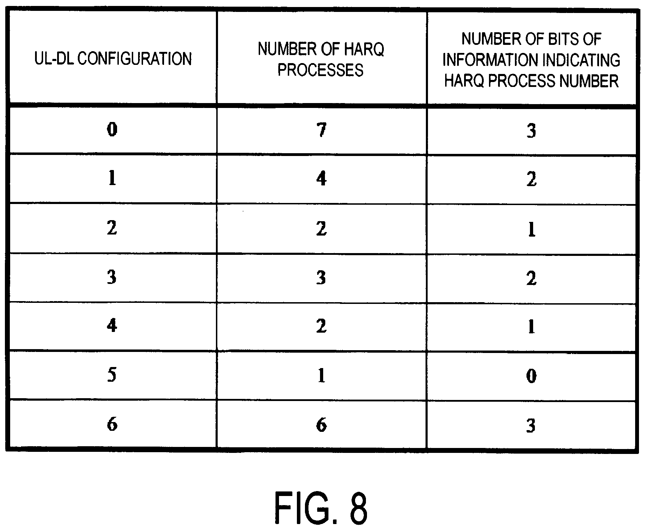

FIG. 8 is a table showing an example of the number of HARQ processes that are managed in parallel by a HARQ entity related to a TDD serving cell, according to the present embodiment. The number of HARQ processes that are managed by one HARQ entity related to a TDD serving cell may be determined from the UL-DL configuration configured for the TDD serving cell. Information, included in the DCI format 0, which indicates the number of the HARQ process for the TDD serving cell to which the asynchronous HARQ is applied may be determined from the UL-DL configuration configured for the TDD serving cell. In FIG. 8, in a case that the UL-DL configuration 5 is configured for a TDD serving cell to which the asynchronous HARQ is applied, information, included in the DCI format 0, which indicates the number of the HARQ process for the TDD serving cell is 0 bit in length.

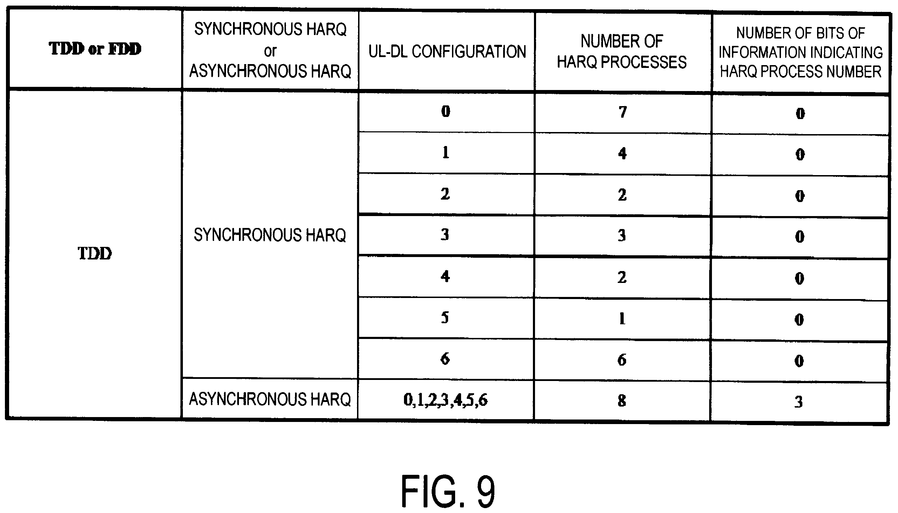

FIG. 9 is a table showing another example of the number of HARQ processes that are managed in parallel by a HARQ entity related to a TDD serving cell, according to the present embodiment. The number of HARQ processes that are managed in parallel by one HARQ entity related to a TDD serving cell may depend on whether the synchronous HARQ or the asynchronous HARQ is applied to the TDD serving cell. In FIG. 9, in a case that the synchronous HARQ is applied to a TDD serving cell, the number of HARQ processes that are managed by one HARQ entity related to the TDD serving cell is determined from the UL-DL configuration configured for the TDD serving cell. In FIG. 9, in a case that the asynchronous HARQ is applied to a TDD serving cell, the number of HARQ processes that are managed by one HARQ entity related to the TDD serving cell is eight regardless of the UL-DL configuration.

The number of bits corresponding to the information, included in the DCI format 0, which indicates the number of a HARQ process for a TDD serving cell may depends on whether the synchronous HARQ or the asynchronous HARQ is applied to the TDD serving cell. In FIG. 9, in a case that the asynchronous HARQ is applied to a TDD serving cell, the number of bits corresponding to information, included in the DCI format 0, which indicates the number of a HARQ process for the TDD serving cell is three regardless of the UL-DL configuration.

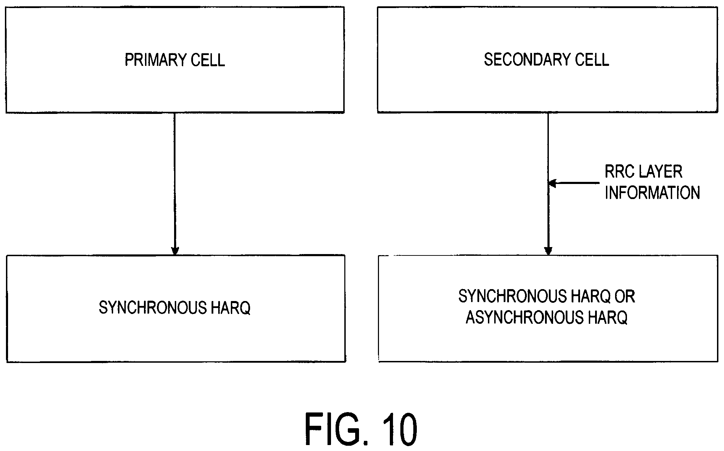

A configuration related to HARQ in the RRC layer will be described below with reference to FIG. 10 to FIG. 13.

The terminal device 1 may control whether the synchronous HARQ or the asynchronous HARQ is applied to each serving cell including an uplink component carrier or to each HARQ entity. In other words, a HARQ process to which the synchronous HARQ is applied and a HARQ process to which the asynchronous HARQ is applied need not be related to the same serving cell. In other words, a HARQ process to which the synchronous HARQ is applied and a HARQ process to which the asynchronous HARQ is applied need not be related to the same HARQ entity.

The base station device 3 may transmit, to the terminal device 1, RRC layer information indicating the asynchronous HARQ for a given serving cell. In a case that the RRC layer information indicating the asynchronous HARQ is configured in the RRC layer, the terminal device 1 may apply the asynchronous HARQ to the corresponding serving cell (i.e., transmission on the corresponding serving cell). In a case that the RRC layer information indicating the asynchronous HARQ is not configured in the RRC layer, the terminal device 1 may apply the synchronous HARQ to the corresponding serving cell. The RRC layer information indicating the asynchronous HARQ may be information indicating that the asynchronous HARQ is enabled.

The base station device 3 may transmit, to the terminal device 1, RRC layer information indicating the synchronous HARQ or asynchronous HARQ for a given serving cell. In a case that the RRC layer information indicating the asynchronous HARQ is configured in the RRC layer, the terminal device 1 may apply the asynchronous HARQ to the corresponding serving cell. The terminal device 1, in a case that the RRC layer information indicating the synchronous HARQ is not configured in the RRC layer, may apply the synchronous HARQ to the corresponding serving cell.

FIG. 10 is a diagram illustrating a first example of a method for switching between the synchronous HARQ and the asynchronous HARQ according to the present embodiment. In FIG. 10, whether the synchronous HARQ or the asynchronous HARQ is applied to the uplink on a serving cell is determined from the type of the serving cell (the primary cell or the secondary cell). In FIG. 10, regardless of the RRC layer information, the synchronous HARQ is always applied to the uplink on the primary cell uplink (i.e., uplink transmission on the primary cell). In FIG. 10, the synchronous HARQ or the asynchronous HARQ is applied to the uplink on the secondary cell (i.e., uplink transmission on the secondary cell) based on the RRC layer information for the secondary cell. With the above configuration, the use of the primary cell, to which the synchronous HARQ is always applied in the uplink, enables controlling, in the RRC layer, of whether the synchronous HARQ or the asynchronous HARQ is applied to the secondary cell.

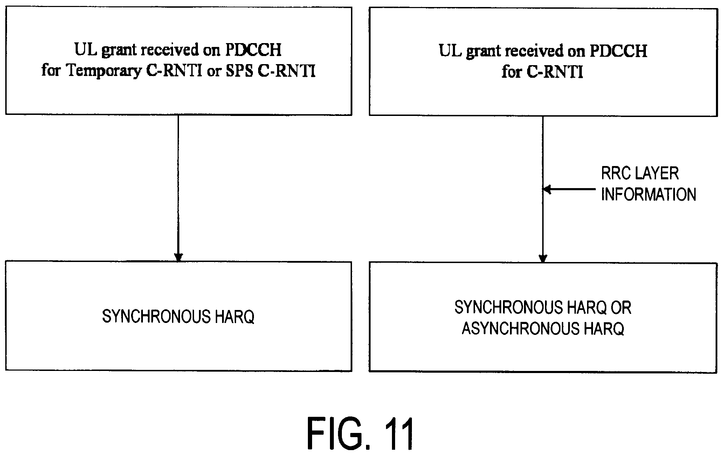

FIG. 11 is a diagram illustrating a second example of a method for switching between the synchronous HARQ and the asynchronous HARQ according to the present embodiment. In FIG. 11, which one of the synchronous HARQ or the asynchronous HARQ is applied to the uplink is determined from a Radio Network Temporary Identifier (RNTI) related to an uplink grant. In FIG. 11, regardless of the RRC layer information, the synchronous HARQ is always applied to the MAC layer data (uplink data transmission) corresponding to the uplink grant received on the PDCCH including CRC parity bits scrambled by the Temporary C-RNTI or the SPS C-RNTI. In FIG. 11, the synchronous HARQ or the asynchronous HARQ is applied to the MAC layer data corresponding to the uplink grant received on the PDCCH including CRC parity bits scrambled by the C-RNTI, based on the RRC layer information.

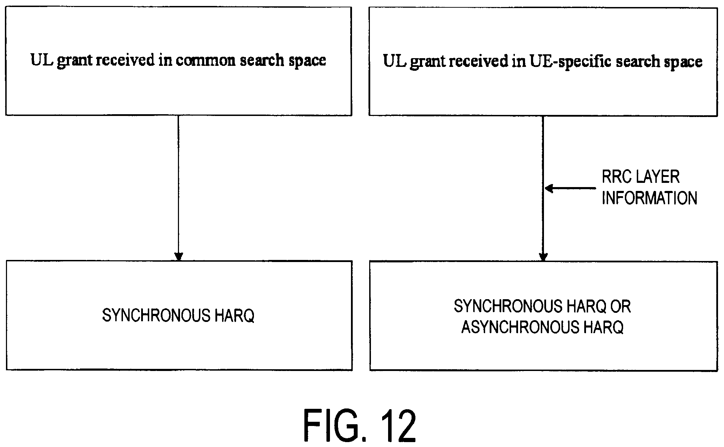

FIG. 12 is a diagram illustrating a third example of a method for switching between the synchronous HARQ and the asynchronous HARQ according to the present embodiment. In FIG. 12, in the uplink, whether the synchronous HARQ or the asynchronous HARQ is applied is determined from the type of a search space where an uplink grant has been received. In FIG. 12, regardless of the RRC layer information, the synchronous HARQ is always applied to the MAC layer data corresponding to the uplink grant received in the Common Search Space. In FIG. 12, the synchronous HARQ or the asynchronous HARQ is applied to the MAC layer data corresponding to the uplink grant received in the UE-specific Search Space, based on the RRC layer information.

The UE-specific Search Space is determined from at least the value of the C-RNTI set by the terminal device 1. That is, the UE-specific Search Space is determined for each terminal device 1. In other words, the Common Search Space serves as a search space common to multiple terminal devices 1. Terminal devices 1, which support the asynchronous HARQ, and terminal devices 1, which do not support the asynchronous HARQ share the same Common Search Space. In addition, in the Common Search Space, the common PDCCH is broadcast to the terminal devices 1, which supports the asynchronous HARQ, and the terminal devices 1, which do not support the asynchronous HARQ. Consequently, the DCI format 0 transmitted in the Common Search Space suitably has the same payload size as before. In other words, the DCI format 0 transmitted in the Common Search Space does not include information for indicating a HARQ process number. Only the DCI format 0 transmitted in the UE-specific Search Space includes information for indicating the HARQ process number. The synchronous HARQ is always applied to the MAC layer data corresponding to the uplink grant received in the Common Search Space, which eliminates the need for adding the information for indicating the HARQ process number to the DCI format 0 to be transmitted in the Common Search Space, and in turn makes the payload size of the DCI format 0 to be transmitted in the Common Search Space the same as before.

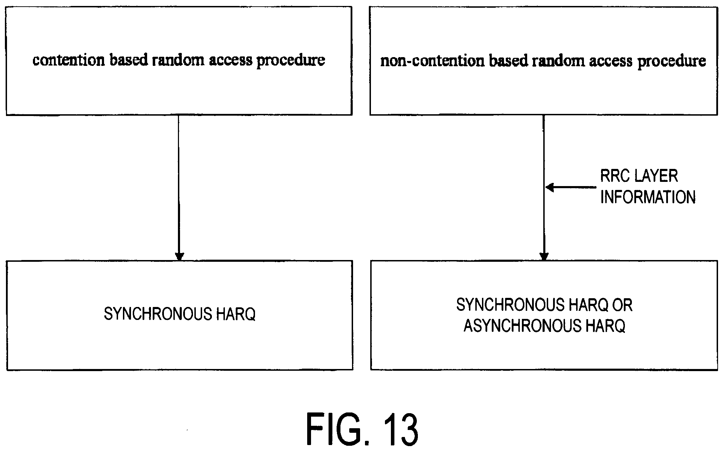

FIG. 13 is a diagram illustrating a fourth example of a method for switching between the synchronous HARQ and the asynchronous HARQ according to the present embodiment. In FIG. 13, whether the synchronous HARQ or the asynchronous HARQ is applied to the uplink is determined from the type of a random access procedure. In FIG. 13, regardless of RRC layer information, the synchronous HARQ is always applied to MAC layer data corresponding to an uplink grant included in a random access response associated with a contention based random access procedure. In FIG. 13, the synchronous HARQ or the asynchronous HARQ is applied to MAC layer data corresponding to an uplink grant included in a random access response associated with a non-contention based random access procedure, based on RRC layer information.

In FIG. 11 to FIG. 13, the asynchronous HARQ may be applied to the primary cell. In such a case, the synchronous HARQ may be applied to transmission of a random access message 3 on the primary cell. Further, the synchronous HARQ may be applied to the MAC layer data corresponding to the uplink grant received in the Common Search Space on the primary cell.

Although the first to fourth examples of a method for switching between the synchronous HARQ and the asynchronous HARQ have been described with reference to FIG. 10 to FIG. 13, the specific configuration is not limited to the first to fourth examples, and includes design variations included in the scope that does not depart from the gist of the present invention. Furthermore, embodiments obtained by suitably combining technical methods disclosed according to the first to fourth examples of the present embodiment are also included in the technical scope of the present invention.

The random access procedures will be described below.

The random access procedure may be executed on the primary cell and secondary cell according to the present embodiment. However, only one random access procedure is executed at a point in the time domain. That is, multiple random access procedures are not executed simultaneously.

According to the present embodiment, either of the contention based random access procedure and the non-contention based random access procedure may be executed on the primary cell. According to the present embodiment, the non-contention based random access procedure may be executed on the secondary cell. According to the present embodiment, the contention based random access procedure is not executed on the secondary cell.

A random access preamble may be transmitted on a PRACH on the primary cell. The terminal device 1 receives, from the base station device 3, information (RRC message) related to a random access procedure on the primary cell. The information related to the random access procedure on the primary cell includes information indicating a set of PRACH resources on the primary cell.

A random access preamble may be transmitted on a PRACH on the secondary cell. The terminal device 1 receives, from the base station device 3, information (RRC message) related to a random access procedure on the secondary cell. The information related to the random access procedure on the secondary cell includes information indicating a set of PRACH resources on the secondary cell.

In the contention based random access procedure, the terminal device 1 itself selects a random access preamble index. In the non-contention based random access procedure, the random access preamble index is selected based on information received by the terminal device 1 from the base station device 3. In a case that all the values of the bits corresponding to the information received from the base station device 3 are 0, the terminal device 1 executes the contention based random access procedure in which the terminal device 1 itself selects a random access preamble index.

A random access response for the primary cell or the secondary cell is transmitted on the PDSCH on the primary cell. The random access response includes an uplink grant field to which an uplink grant is mapped and a Temporary C-RNTI field to which information for indicating a Temporary C-RNTI is mapped. The uplink grant included in the random access response is also referred to as a random access response grant.

In a case that the received random access response includes a random access preamble identifier corresponding to the transmitted random access preamble selected based on the information received by the terminal device 1 from the base station device 3, the terminal device 1 determines that the non-contention based random access procedure has been successfully completed and transmits the PUSCH based on the uplink grant included in the random access response.

In a case that the received random access response includes a random access preamble identifier corresponding to the transmitted random access preamble and the terminal device 1 itself selects the random access preamble, the terminal device 1 sets the Temporary C-RNTI as the value in the Temporary C-RNTI field included in the received random access response and transmits the random access message 3 on the PUSCH based on the uplink grant included in the random access response.

The PUSCH corresponding to the uplink grant included in the random access response is transmitted on the serving cell on which the corresponding preamble has been transmitted on the PRACH.

In a case that the Temporary C-RNTI is not set, the PUSCH corresponding to the uplink grant included in the random access response and the PUSCH retransmission of the same transport block are scrambled based on the C-RNTI.

In a case that the Temporary C-RNTI is set, the PUSCH corresponding to the uplink grant included in the random access response and the PUSCH retransmission of the same transport block are scrambled based on the Temporary C-RNTI.

In a case that the Temporary C-RNTI is set, the PUSCH retransmission of the transport block transmitted on the PUSCH corresponding to the uplink grant included in the random access response is scheduled with the DCI format 0 to which CRC parity bits scrambled by the Temporary C-RNTI is added. The DCI format 0 is transmitted on a PDCCH in the Common Search Space.

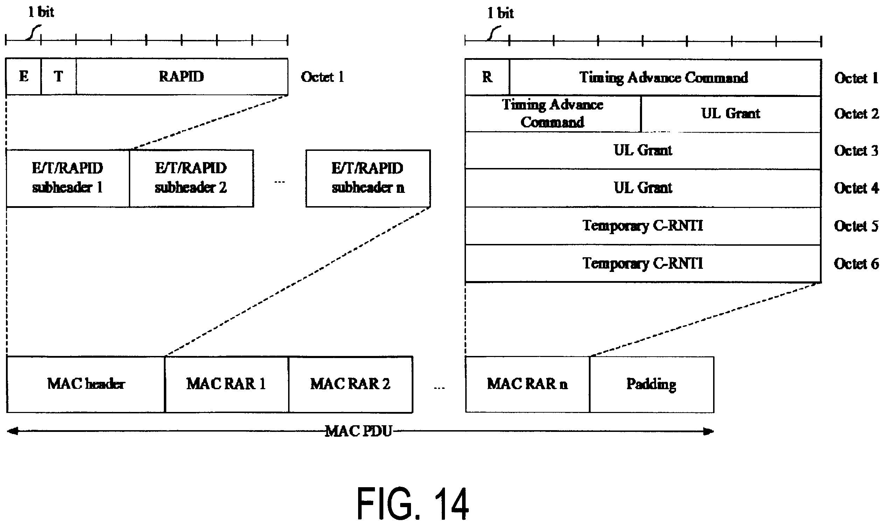

FIG. 14 is a diagram illustrating an example of the random access response according to the present embodiment.

In the downlink, one MAC PDU is allowed to include multiple random access responses. In FIG. 14, the MAC Random Access Response (RAR) indicates a random access response. The MAC PDU in FIG. 14 includes one MAC header, n random access responses, and padding. In FIG. 14, the one MAC header includes n E/T/RAPID subheaders (E/T/RAPID fields).

The E/T/RAPID subheader includes an Extension field (E field), a Type field (T field), and a Random Access Preamble Identifier field (RAPID field). The E field is a flag indicating whether more fields are present in the MAC header. The E field is set to "1" to indicate that at least another set of E/T/RAPID field follows. The E field is set to "0" to indicate that either a MAC RAR or padding starts at the next byte.

The T field is a flag indicating whether the MAC subheader contains a RAPID field and a Backoff Indicator field. The T field is set to "1" to indicate the presence of a RAPID field in the MAC subheader.

The RAPID field identifies the transmitted random access preamble. In a case that the random access preamble transmitted by the terminal device 1 corresponds to the RAPID field, the terminal device 1 determines that the reception of the random access response has succeeded and processes the corresponding MAC RAR.

The MAC RAR includes an R field, a timing advance command field, an uplink grant field, and a Temporary C-RNTI field. The R field is a reserved bit set to 0. The timing advance command field indicates an index value T_{A} used to control the amount of timing adjustment for PUSCH/SRS transmission.

The uplink grant field indicates PUSCH resources used in the uplink. The uplink grant field has an uplink grant mapped thereto. The Temporary C-RNTI field indicates the Temporary C-RNTI used by the terminal device 1 in the contention based random access procedure.

The random access response (MAC RAR) does not include information indicating the number of a HARQ process number, which brings about a problem that the number of the HARQ process related to the uplink grant included in the random access response associated with the non-contention based random access procedure cannot be identified.

Then, information indicating the number of the HARQ process related to the uplink grant included in the random access response may be mapped to the Temporary C-RNTI field included in the same random access response associated with the non-contention based random access procedure on a serving cell to which the asynchronous HARQ is applied. In other words, the Temporary C-RNTI field, included in the random access response associated with the non-contention based random access procedure on the serving cell, to which the asynchronous HARQ is applied, may be reused to identify the number of the HARQ process related to the uplink grant included in the same random access response.

The random access response associated with the non-contention based random access procedure on the serving cell to which the asynchronous HARQ is applied may include a HARQ information field, instead of the Temporary C-RNTI field. Further, the MAC RAR may include an F field, which is a flag indicating that either the Temporary C-RNTI field or the HARQ information field is included. The MAC RAR including the F field is referred to as an extended MAC RAR according to the present embodiment.

The HARQ information field included in the MAC RAR is mapped to the information indicating at least the HARQ process number. In other words, the HARQ information field included in the MAC RAR is used to indicate at least the HARQ process number. Further, the HARQ information field included in the MAC RAR may be used to indicate a modulation and coding scheme. Further, the HARQ information field included in the MAC RAR may be used to indicate a redundancy version.

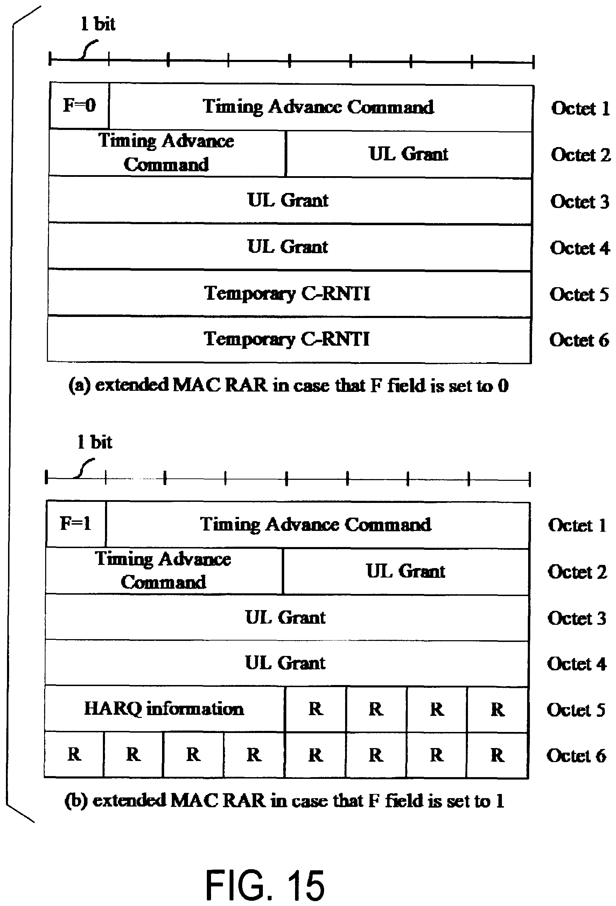

FIG. 15 is a diagram illustrating examples of extended MAC RARs according to the present embodiment. (a) in FIG. 15 is a diagram illustrating an example of an extended MAC RAR in a case that the F field is set to "0". In a case that the extended MAC RAR includes the Temporary C-RNTI field, the F field included in the extended MAC RAR is set to "0". (b) in FIG. 15 is a diagram illustrating an example of an extended MAC RAR in a case that the F field is set to "1". In a case that the extended MAC RAR includes the HARQ information field, the F field included in the extended MAC RAR is set to "1."

The F field enables the terminal device 1 to identify the fields included in the extended MAC RAR. The F field is set to "0", which enables the terminal devices in the related art to identify the extended MAC RAR as the MAC RAR in the related art. Consequently, even in a case that the MAC RAR in the related art and the extended MAC RAR are multiplexed in a single MAC PDU, such terminal devices in the related art are not affected.

Further, the number of the HARQ process related to the uplink grant, included in the random access response associated with the non-contention based random access procedure on the serving cell to which the asynchronous HARQ is applied, may have a specific value. For example, the specific value may be indicated by the RRC layer information. For example, the specific value may be based on whether the serving cell supports FDD or TDD. For example, the specific value may be based on a UL-DL configuration. For example, the specific value may be predetermined in the specifications or the like.

Further, the terminal device 1 may determine that the uplink grant included in the random access response associated with the non-contention based random access procedure on the serving cell, to which asynchronous HARQ is applied, is invalid. In other words, the terminal device 1 may ignore/discard the uplink grant included in the random access response associated with the non-contention based random access procedure on the serving cell, to which the asynchronous HARQ is applied.

Reconfiguration/modification of HARQ functionality will be described below.

As described above, which one of the synchronous HARQ or the asynchronous HARQ is applied to the secondary cell is controlled by the RRC layer. The terminal device 1 is capable of performing reconfiguration of/modification to the HARQ functionality on a given secondary cell. For example, the terminal device 1, after configuring the asynchronous HARQ to a given secondary cell based on the RRC layer information, is capable of reconfiguring the synchronous HARQ to the given secondary cell based on another RRC layer information. For example, the terminal device 1, after configuring the synchronous HARQ to a given secondary cell based on the RRC layer information, is capable of reconfiguring the asynchronous HARQ to the given secondary cell based on another RRC layer information. For example, the terminal device 1, after configuring the asynchronous HARQ to a given secondary cell based on the RRC layer information indicating that the asynchronous HARQ is enabled, is capable of releasing the RRC layer information and reconfiguring the synchronous HARQ to the given secondary cell. This configuration enables controlling of the HARQ functionality in a flexible manner. Here, the RRC layer information indicates the synchronous HARQ or the asynchronous HARQ. Further, the RRC layer information may be information indicating that the asynchronous HARQ is enabled.

The terminal device 1 transmits an RRC Complete message to the base station device 3 after reconfiguring/modifying the HARQ functionality. The base station device 3 is capable of identifying which one of the synchronous HARQ or the asynchronous HARQ is configured as the HARQ functionality in the terminal device 1, based on receipt of the RRC Complete message

However, the number of HARQ processes that are managed in parallel by the HARQ entity related to the secondary cell may differ depending on which one of the synchronous HARQ or the asynchronous HARQ is applied to the secondary cell. Therefore, in a case that the RRC layer information related to the HARQ functionality for a given secondary cell is modified (reconfigured or released), the base station device 3 may become unable to identify the HARQ process that the terminal device 1 is continuously performing.

Therefore, in a case that the RRC layer information for a given serving cell is modified (reconfigured or released), the terminal device 1 may flush multiple HARQ buffers, related to the serving cell, of the multiple HARQ buffers included in the terminal device 1, except for the buffer related to the random access message 3. Further, in a case that the RRC layer information for a given serving cell is modified (reconfigured or released), the terminal device 1 may set 0 as the value of the NDI for the HARQ process related to the serving cell, except for the NDI related to the random access message 3. Further, in a case that the RRC layer information for a given serving cell is modified (reconfigured or released), the terminal device 1 and the base station device 3 may determine that the next transmission related to the HARQ process related to the serving cell is the initial transmission, except for the transmission related to the random access message 3. Moreover, in a case that the RRC layer information for a given serving cell is modified (reconfigured or released), the terminal device 1 and the base station device 3 may initialize the HARQ entity related to the serving cell.

Then, in a case that the RRC layer information for a given secondary cell is modified (reconfigured or released), the terminal device 1 may flush multiple HARQ buffers for the secondary cell, of the multiple HARQ buffers included in the terminal device 1. Further, in a case that the RRC layer information for a given secondary cell is modified (reconfigured or released), the terminal device 1 may set 0 as the value of the NDI for the HARQ process related to the secondary cell. Further, in a case that the RRC layer information for a given secondary cell is modified (reconfigured or released), the terminal device 1 and the base station device 3 may determine that the next transmission related to the HARQ process related to the secondary cell is the initial transmission. Moreover, in a case that the RRC layer information for a secondary serving cell is modified (reconfigured or released), the terminal device 1 and the base station device 3 may initialize the HARQ entity related to the secondary cell.

This configuration enables the base station device 3 to control the HARQ process after reconfiguring/modifying the HARQ functionality in an appropriate manner, in a case that the base station device 3 transmits, to the terminal device 1, the RRC layer information indicating reconfiguration of/modification to the HARQ functionality.

The number of transmissions of the MAC layer data will be described below.

The HARQ process to which the synchronous HARQ is applied manages a counter CURRENT_TX_NB. The HARQ process to which the synchronous HARQ is applied sets the counter CURRENT_TX_NB to "0", in a case of the initial transmission of the MAC layer data. The HARQ process to which the synchronous HARQ is applied increments the counter CURRENT_TX_NB by "0", in a case that the HARQ entity requests retransmission. The HARQ process to which the synchronous HARQ is applied flushes a HARQ buffer associated with the HARQ process to which the synchronous HARQ is applied, in a case that the counter CURRENT_TX_NB reaches a predetermined value (for example, a value smaller than the maximum number of transmissions by one) after the above described operation.

The maximum number of transmissions may be indicated by the RRC layer information transmitted from the base station device 3. Further, the RRC layer information indicating the maximum number of transmissions may be common to multiple serving cells (multiple HARQ entities) to which the synchronous HARQ is applied. That is, a single value indicated by the RRC layer information indicating the maximum number of transmissions may be applied to the multiple serving cells (multiple HARQ entities) to which the synchronous HARQ is applied.

The maximum number of transmissions for the random access message 3 may be configured separately from the maximum number of transmissions for data other than the transmission of the random access message 3. The maximum number of transmissions for the random access message 3 may be indicated by the RRC layer information transmitted from the base station device 3.

A survival duration time of the MAC layer data will be described below.

The HARQ process to which the asynchronous HARQ is applied may manage a HARQ survival duration timer. The HARQ process to which the asynchronous HARQ is applied may start the HARQ survival duration timer, in a case that the initial transmission is indicated by the HARQ entity or the related uplink grant (PDCCH) indicates the initial transmission. The HARQ process to which the asynchronous HARQ is applied may flush the HARQ buffer associated with the HARQ process based on the expiration of the HARQ survival duration timer.

The value (duration) of the HARQ survival duration timer may be determined from the maximum number of transmissions indicated by the RRC layer information transmitted from the base station device 3. Further, the value (duration) of the HARQ survival duration timer may be explicitly indicated by the RRC layer information transmitted from the base station device 3, irrespective of the maximum number of transmissions. In addition, the RRC layer information explicitly indicating the value (duration) of the HARQ survival duration timer may be common to the multiple serving cells (multiple HARQ entities), to which the asynchronous HARQ is applied. In other words, a single value (duration) indicated by the RRC layer information indicating the value (duration) of the HARQ survival duration timer may be applied to the multiple serving cells (multiple HARQ entities) to which the asynchronous HARQ is applied.

The HARQ process manages a state variable HARQ_FEEDBACK. The HARQ process instructs the physical layer to generate a transmission in response to an uplink grant, in a case that the HARQ entity requests a non-adaptive retransmission and a NACK is set to the state variable HARQ_FEEDBACK.

The HARQ process to which the synchronous HARQ is applied sets the ACK or the NACK to the state variable HARQ_FEEDBACK based on the HARQ indicator received on the PHICH. The HARQ process to which the asynchronous HARQ is applied need not set the ACK or the NACK to the state variable HARQ_FEEDBACK based on the HARQ indicator received on the PHICH.

The HARQ process to which the synchronous HARQ is applied sets the NACK to the state variable HARQ_FEEDBACK based on the initial transmission by the HARQ entity or on the adaptive retransmission request. Further, the HARQ process to which the asynchronous HARQ is applied sets an ACK to the state variable HARQ_FEEDBACK based on the initial transmission by the HARQ entity or on the adaptive retransmission request. Here, the adaptive retransmission corresponds to a retransmission indicated by the NDI, and the non-adaptive retransmission corresponds to a retransmission indicated by the HARQ indicator. This configuration prevents the HARQ process, to which the asynchronous is applied, from performing the non-adaptive retransmission.

Discontinuous Reception (DRX) according to the present invention will be described below.

The DRX functionality is configured by the higher layer (RRC) and processed by the MAC. The DRX functionality controls the PDCCH monitoring activity of the terminal device 1 for the C-RNTI and the SPS C-RNTI of the terminal device 1.

In other words, the DRX functionality controls a monitoring activity of the terminal device 1 for the PDCCH used for transmission of the DCI format to which CRC parity bits scrambled by the C-RNTI or SPS C-RNTI of the terminal device 1 are added.

In a case that the DRX is configured in RRC_CONNECTED, the terminal device 1 may discontinuously monitor the PDCCH using a DRX operation to be described below. Otherwise, the terminal device 1 may continuously monitor the PDCCH.

The DRX operation is common to multiple serving cells.

The higher layer (RRC) controls the DRX operation by configuring multiple timers to be described below and the value of the drxStartOffset. The higher layer (RRC) optionally determines whether to configure the drxShortCycleTimer and the shortDRX-Cycle.

- onDurationTimer
- drx-InactivityTimer
- drx-RetransmissionTimer (one per downlink HARQ process except for the downlink HARQ process for the broadcast process)
- UL-drx-RetransmissionTimer (one per uplink HARQ process to which the asynchronous HARQ is applied)
- longDRX-Cycle
- HARQ Round Trip Time (RTT) timer (one per downlink HARQ process, and one per uplink HARQ process to which the asynchronous HARQ is applied)
- drxShortCycleTimer (optional)
- shortDRX-Cycle (optional)

The base station device 3 may transmit an RRC message to the terminal device 1. The RRC message includes parameters/information indicating the onDurationTimer, the drx-InactivityTimer, the drx-RetransmissionTimer, the longDRX-Cycle, the drxShortCycleTimer, the shortDRX-Cycle, and the value of the drxStartOffset.

The terminal device 1 may set the onDurationTimer, the drx-InactivityTimer, the drx-RetransmissionTimer, the longDRX-Cycle, the drxShortCycleTimer, the shortDRX-Cycle, and the value of the drxStartOffset, based on the received RRC message.

The longDRX-Cycle and the shortDRX-Cycle are collectively referred to as a DRX cycle.

The onDurationTimer indicates the number of consecutive PDCCH-subframes from the beginning of the DRX cycle.

The drx-InactivityTimer indicates the number of the consecutive PDCCH-subframes subsequent to the subframe, to which the PDCCH indicating the initial transmission of uplink data or downlink data to the terminal device 1 is mapped.

The drx-RetransmissionTimer indicates the maximum number of the consecutive PDCCH-subframes for the downlink retransmission expected by the terminal device 1. An identical value used for the drx-RetransmissionTimer is applied to all the serving cells.

The UL-drx-RetransmissionTimer indicates the maximum number of the consecutive PDCCH-subframes for the uplink retransmission expected by the terminal device 1. In the uplink, the identical value used for the drx-RetransmissionTimer is applied to all the serving cells to which the asynchronous HARQ is applied.

The DRX cycle indicates the periodic repetition of On Duration. The On Duration period is followed by a possible period of inactivity of PDCCH monitoring by the terminal device 1 for the C-RNTI and SPS C-RNTI of the terminal device 1.

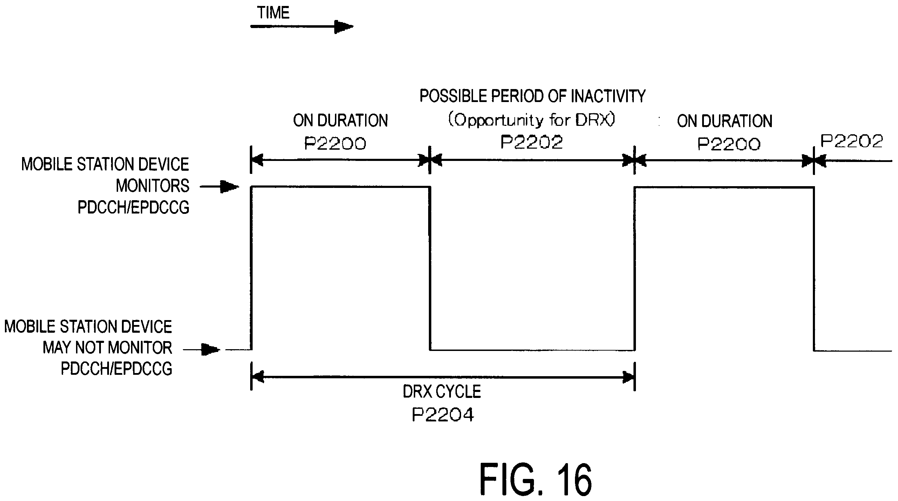

FIG. 16 is a diagram illustrating an example of the DRX cycle according to the present embodiment. In FIG. 16, the horizontal axis is a time axis. In FIG. 16, the terminal device 1 monitors the PDCCH/EPDCCH during an On Duration period P2200. In FIG. 16, a period P2202 after the On Duration period P2200 is a possible period of inactivity. That is, in FIG. 16, the terminal device 1 need not monitor the PDCCH/EPDCCH during the period P2202.

The drxShortCycleTimer indicates the number of consecutive subframes for which the terminal device 1 follows the shortDRX-Cycle.

The drxStartOffset indicates the subframe where the DRX cycle starts.

The HARQ RTT timer for the corresponding downlink HARQ process is associated with the start of the drx-RetransmissionTimer and is managed for each downlink HARQ process. The HARQ RTT timer for the corresponding downlink HARQ process indicates the minimum interval between the downlink data transmission and the downlink data retransmission. That is, the HARQ RTT timer for the corresponding downlink HARQ process indicates the minimum amount of subframes before the downlink HARQ retransmission is expected by the terminal device 1.

In FDD, the HARQ RTT timer for the corresponding downlink HARQ process is set to 8 subframes. In TDD, the HARQ RTT timer for the corresponding downlink HARQ process is set to k+4 subframes, where k is the interval between the downlink transmission and HARQ feedback associated with the downlink transmission and is identified (selected or determined) in accordance with the UL-DL configuration.

In the present embodiment, one downlink HARQ process controls the HARQ of one piece of downlink data (transport block). In addition, one downlink HARQ process may control two pieces of downlink data.

The HARQ RTT timer for the corresponding uplink HARQ process is associated with the start of the UL-drx-RetransmissionTimer and is managed for each uplink HARQ process. The HARQ RTT timer for the corresponding uplink HARQ process indicates the minimum interval between the uplink data transmission to the uplink data retransmission. That is, the HARQ RTT timer for the corresponding uplink HARQ process indicates the minimum amount of subframes before the schedule of the uplink HARQ retransmission is expected by the base station device 3.

In FDD, the HARQ RTT timer for the corresponding uplink HARQ process is set to 8 subframes. In TDD, the HARQ RTT timer for the corresponding uplink HARQ process is set to j+4 subframes, where j is the interval between the uplink transmission and HARQ feedback associated with the uplink transmission and is identified (selected or determined) in accordance with the UL-DL configuration.

In the present embodiment, one uplink HARQ process controls the HARQ of one piece of uplink data (transport block).

In a case that the DRX cycle is configured, the Active Time includes a period fulfilling at least one of the following conditions (i) to (1).

- Condition (i): the onDurationTimer, the drx-InactivityTimer, the drx-RetransmissionTimer, the UL-drx-RetransmissionTimer, or a mac-ContentionResolutionTimer is running
- Condition (j): the Scheduling Request has been transmitted on the PUCCH, and is pending
- Condition (k): the uplink grant for the pending HARQ retransmission is possibly transmitted for the synchronous HARQ, and the corresponding HARQ buffer has data
- Condition (1): after successfully receiving the random access response for a preamble not selected by the terminal device 1, the PDCCH including the C-RNTI of the terminal device 1 and indicating that the initial transmission has not been received

The timer, once started, keeps running until the timer is stopped or expires. Otherwise, the timer is not running. In a case that the timer is not running, the timer is possibly started. In a case that the timer is running, the timer is possibly restarted. The timer always starts or restarts with the initial value set to the timer.

The preamble is a message 1 of the random access procedure, and is transmitted on the PRACH. The preamble not selected by the terminal device 1 is associated with the contention based random access procedure.

The random access response is a message 2 of the random access procedure and is transmitted on the PDSCH. The base station device 3 transmits the random access response to the received preamble.

The terminal device 1 in the contention based random access procedure transmits the message 3 after receiving the random access response. The terminal device 1 monitors the PDCCH associated with a message 4 after the message 3 is transmitted.

The mac-ContentionResolutionTimer indicates the number of consecutive subframes, during which the terminal device 1 monitors the PDCCH, after the message 3 is transmitted.

The same Active Time is applied to all the activated serving cells. The primary cell is always activated. The secondary cell is activated or deactivated by the MAC. The base station device 3 transmits, to the terminal device 1, the MAC CE indicating activation or deactivation of the secondary cell.

The terminal device 1 need not monitor the PDCCH on the deactivated serving cell. The terminal device 1 need not monitor the PDCCH on the deactivated serving cell.

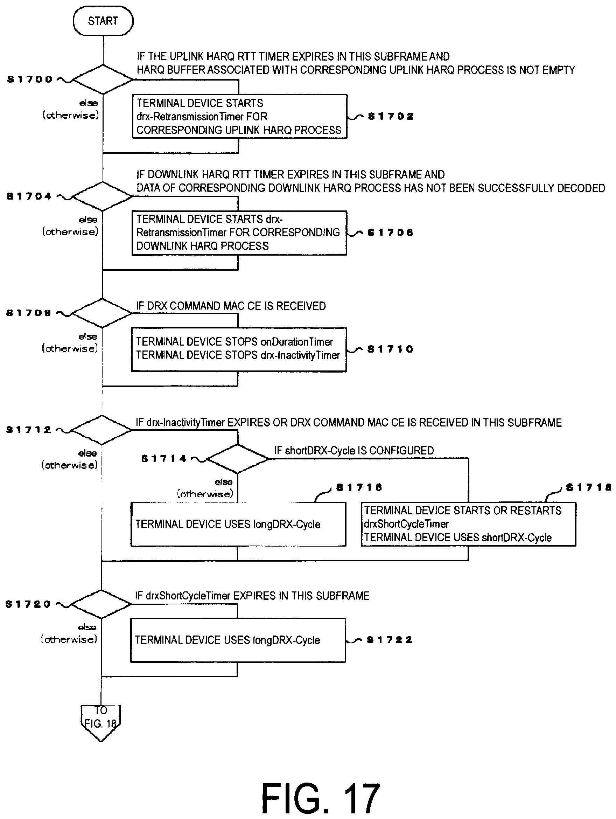

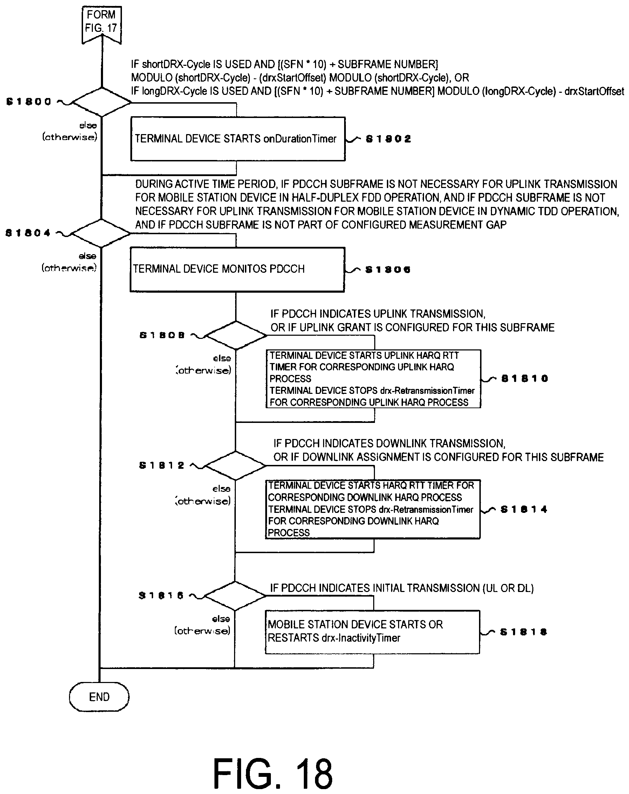

FIG. 17 and FIG. 18 are flow charts illustrating an example of a DRX operation according to the present embodiment. In a case that the DRX is configured, the terminal device 1 performs the DRX operation on each subframe based on the flow charts in FIG. 17 and FIG. 18.

In a case that, in the subframe, the HARQ RTT timer for the corresponding uplink HARQ process expires and the data exists in the HARQ buffer associated with the HARQ process related to the HARQ RTT timer (S1700), the terminal device 1 starts the UL-drx-RetransmissionTimer for the uplink HARQ process related to the HARQ RTT timer (S1702), and then proceeds to S1704. Otherwise (S 1700), the terminal device 1 proceeds to S 1704. In a case that, in the subframe, the HARQ RTT timer for the corresponding uplink HARQ process expires and the HARQ survival duration timer associated with the HARQ process corresponding to the HARQ RTT timer is running, the terminal device 1 may start the UL-drx-RetransmissionTimer for the uplink HARQ process related to the HARQ RTT timer. That is, in a case that, in the subframe, the HARQ RTT timer for the corresponding uplink HARQ process expires (S1700), irrespective of whether the data of the HARQ process corresponding to the HARQ RTT timer has been successfully decoded, the terminal device 1 starts the UL-drx-RetransmissionTimer for the uplink HARQ process related to the HARQ RTT timer (S1702).

In a case that, in the subframe, the HARQ RTT timer for the corresponding downlink HARQ process expires and the data of the HARQ process related to the HARQ RTT timer has not been successfully decoded (S1704), the terminal device 1 starts the drx-RetransmissionTimer for the downlink HARQ process related to the HARQ RTT timer (S1706), and then proceeds to S1708. Otherwise (S1704), the terminal device 1 proceeds to S1708.

In a case that the DRX command MAC CE is received (S1708), the terminal device 1 stops the onDurationTimer and the drx-InactivityTimer (S1710), and then proceeds to S 1712. Otherwise (S 17708), the terminal device 1 proceeds to S1712.

In a case that the drx-InactivityTimer expires or the DRX command MAC CE is received in the subframe (S1712), the terminal device 1 proceeds to S 1714. Otherwise (S 1712), the terminal device 1 proceeds to S1720.

In a case that the shortDRX-Cycle is not configured (S 1714), the terminal device 1 uses the longDRX-Cycle (S1716), then proceeds to S1720. In a case that the shortDRX-Cycle is configured (S1714), the terminal device 1 starts or restarts the drxShortCycleTimer and uses shortDRX-Cycle (S1718), and then proceeds to S1720.

In the subframe, in a case that the drxShortCycleTimer expires (S1720), the terminal device 1 uses the longDRX-Cycle (S 1722), and then proceeds to S1800 in FIG. 18. Otherwise (S1720), the terminal device 1 proceeds to S1800 in FIG. 18.

(1) In a case that the shortDRX-Cycle is used and [(SFN * 10) + subframe number] modulo (shortDRX-Cycle) = (drxStartOffset) modulo (shortDRX-Cycle), or (2) if the longDRX-Cycle is used and [(SFN * 10) + subframe number] modulo (longDRX-Cycle) = drxStartOffset (S1800), the terminal device 1 starts the onDurationTimer (S1802), and then proceeds to S1804. Otherwise (S1800), the terminal device 1 proceeds to S1804.

In a case that all the following conditions (m) to (p) are satisfied (S1804), the terminal device 1 monitors the PDCCH in the subframe (1806), and then proceeds to S1808.

- Condition (m): the subframe is in an Active Time period
- Condition (n): the subframe is a PDCCH subframe
- Condition (o): the subframe is not required for the uplink transmission of the terminal device 1 in a half-duplex FDD operation
- Condition (p): the subframe is not part of the configured measurement gap

In a serving cell in the half-duplex FDD, the terminal device 1 is not allowed to perform either the uplink transmission or the downlink reception simultaneously. The terminal device 1 may transmit, to the base station device 3, information indicating whether to support the half-duplex FDD in the FDD band.

The measurement gap is a time interval at which the terminal device 1 measures cells on different frequencies and/or different Radio Access Technologies (RATs). The base station device 3 transmits, to the terminal device 1, information indicating the period of the measurement gap. The terminal device 1 configures the period of the measurement gap, based on the above information.

In a case that at least one of the conditions (m) to (p) is not satisfied (S1804), the terminal device 1 terminates the DRX operation for the subframe. That is, in a case that at least one of the conditions (m) to (p) is not satisfied, the terminal device 1 need not monitor the PDCCH in the subframe.

The conditions used in S1804 are not limited to the conditions (m) to (p), and conditions different from the conditions (m) to (p) or some of the conditions (m) to (p) may be used in S1804.

In a case that the uplink grant received via the PDCCH indicates an uplink transmission or the uplink grant is configured for this subframe (S1808), the terminal device 1 starts the HARQ RTT timer for the corresponding uplink HARQ process, and stops the UL-drx-RetransmissionTimer for the corresponding uplink HARQ process (S1810). Otherwise (S1808), the terminal device 1 proceeds to S1812. The terminal device 1 may stop the UL-drx-RetransmissionTimer based on the expiration of the HARQ survival duration timer managed by the HARQ process related to the UL-drx-RetransmissionTimer.

The state in which the uplink grant is configured refers to the state in which Semi-Persistent Scheduling is activated by the uplink grant with the SPS C-RNTI.

If the downlink assignment received through the PDCCH indicates the downlink transmission, or the downlink assignment is configured for this sub frame (S1812), the terminal device 1 starts the HARQ RTT timer for the corresponding downlink HARQ process, and stops the drx-RetransmissionTimer for the corresponding downlink HARQ process (S1814). Otherwise (S1812), the terminal device 1 proceeds to S1816.

The state in which the downlink assignment is configured means the state in which the Semi-Persistent Scheduling is activated by the downlink assignment with the SPS C-RNTI.

In a case that the downlink assignment or the uplink grant received via the PDCCH indicates the downlink or uplink initial transmission (S1816), the terminal device 1 starts or restarts the drx-InactivityTimer (1818), and then terminates the DRX operation for this sub frame. Otherwise(S 1816), the terminal device 1 terminates the DRX operation for this subframe. The terminal device 1, in a case that the uplink grant received via the PDCCH indicates the uplink initial transmission, may start the HARQ survival duration timer managed by the corresponding uplink HARQ process.

The terminal device 1 for which the DRX is configured does not transmit the periodic SRS, when not in the Active Time.

The base station device 3 may transmit, to the terminal device 1, information for instructing the terminal device 1 to set up or release CQI masking.

The terminal device 1 for which the DRX is configured and the CQI masking (cqi-Mask) is not set up by the higher layers does not transmit the CSI on the PUCCH, when not in the Active Time. The terminal device 1 for which the DRX is configured and the CQI masking (cqi-Mask) is set up by the higher layers does not transmit the CSI on the PUCCH, when the onDurationTimer is not running.

The PDCCH subframe according to the present invention will be described below.

In the present embodiment, all the subframes, for FDD serving cells are PDCCH-subframes. In the present embodiment, the terminal device 1 and the base station device 3 identify the PDCCH subframes for the TDD serving cells, based on the UL-DL configuration.

In the present embodiment, the terminal device 1, which communicates with the base station device 3 by using one primary cell, and the base station device 3, in half-duplex TDD, identify (select or determine), as a PDCCH subframe, a subframe indicated by the UL-DL configuration related to the primary cell as a downlink subframe or a subframe including the DwPTS.

Executing the TDD operation using one primary cell prevents the terminal device 1 from performing the transmission and the reception simultaneously. In other words, the TDD operation executed using only one primary cell corresponds to the half-duplex TDD.

In the present embodiment, the terminal device 1, which communicates with the base station device 3 by using multiple serving cells including one primary cell and one or multiple secondary cells, and the base station device 3, in a case of half-duplex TDD, identify, as a PDCCH subframe, a subframe indicated by the UL-DL configuration related to the primary cell as a downlink subframe or a subframe including the DwPTS.

In the present embodiment, the terminal device 1, which communicates with the base station device 3 by using multiple serving cells including one primary cell and one or multiple secondary cells, and the base station device 3, in a case of full-duplex TDD, identify, as a PDCCH-subframe, a union of subframes indicated as downlink subframes or subframes including DwPTSs by the UL-DL configuration related to the multiple serving cells, except for the secondary cell for which a parameter (schedulingCellId) is configured, in a case that such a parameter (schedulingCellId) indicating which of the serving cells transmits the downlink allocation for the associated secondary cell is configured for the secondary cell.

In a case that the parameter (schedulingCellId) indicating which serving cell transmits the downlink allocation for the associated secondary cell is not configured for any secondary cell, the process to exclude the secondary cell for which the parameter (schedulingCellId) is configured need not be executed.

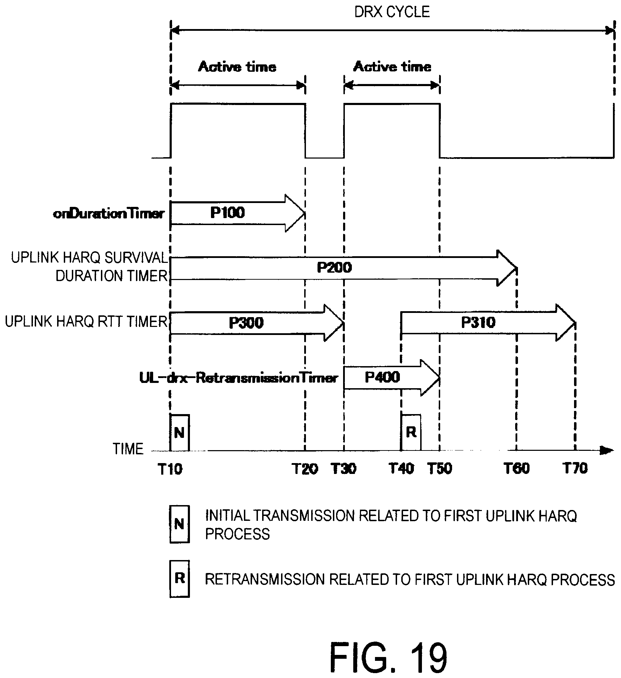

FIG. 19 is a diagram illustrating an example of the DRX according to the present embodiment. In FIG. 19, all the timers, the initial transmission, and the retransmission are related to one HARQ process to which the asynchronous HARQ is applied. In FIG. 19, P100 indicates a period in which the onDurationTimer is running, P200 indicates a period in which the uplink HARQ survival duration timer is running, P200 indicates a period in which the uplink HARQ survival duration timer is running, P300 and P310 indicate periods in which the HARQ RTT timer for the corresponding uplink HARQ process are running, and P400 indicates a period in which the UL-drx-RetransmissionTimer for the corresponding uplink HARQ process is running. In FIG. 19, the period P100 and the period P400 are the Active Times. In FIG. 19, a square having an "N" indicates the initial transmission and a square having an "R" indicates the retransmission.

The onDurationTimer starts and the initial transmission is indicated by the PDCCH at a time T10. The uplink HARQ survival duration timer and the HARQ RTT timer start at the time T10 based on the indication for the initial transmission on the PDCCH. The onDurationTimer expires at a time T20. The HARQ RTT timer expires at a time T30.

At the time T30, the UL-drx-RetransmissionTimer starts based on the fact that the HARQ RTT timer expires while the corresponding HARQ survival duration timer is running, and data is present in the HARQ buffer associated with the HARQ process. The HARQ RTT timer starts at a time T40, based on the indication for retransmission on the PDCCH.

At a time T60, the HARQ survival duration timer expires, and the HARQ buffer associated with the HARQ process is flushed based on the expiration of the HARQ survival duration timer. The HARQ RTT timer expires at a time T70. Even in a case that the HARQ RTT timer expires at the time T70 because the HARQ buffer is empty due to the fact that the HARQ buffer has been flushed at the time T60, the UL-drx-RetransmissionTimer does not start. In other words, even in a case that the HARQ RTT timer expires at the time T70 based on the fact the HARQ survival duration timer is not running, the UL-drx-RetransmissionTimer does not start.

Structures of devices according to the present embodiment will be described below.

FIG. 16 is a schematic block diagram illustrating the structure of the terminal device 1 according to the present embodiment. As illustrated in the figure, the terminal device 1 includes a radio transmission/reception unit 10 and a higher layer processing unit 14. The radio transmission/reception unit 10 includes an antenna unit 11, a Radio Frequency (RF) unit 12, and a baseband unit 13. The higher layer processing unit 14 includes a MAC layer processing unit 15 and a radio resource control layer processing unit 16. The radio transmission/reception unit 10 is also referred to as a transmission unit, a reception unit, or a physical layer processing unit.

The higher layer processing unit 14 outputs uplink data (transport block) created by a user operation or the like, to the radio transmission/reception unit 10. The higher layer processing unit 14 performs processing of the Medium Access Control (MAC) layer, the Packet Data Convergence Protocol (PDCP) layer, the Radio Link Control (RLC) layer, and the Radio Resource Control (RRC) layer.

The MAC layer processing unit 15 in the higher layer processing unit 14 performs the processing of the MAC layer. The MAC layer processing unit 15 controls a HARQ based on various types of configuration information/parameters managed by the radio resource control layer processing unit 16. The MAC layer processing unit 15 manages multiple HARQ entities, multiple HARQ processes, and multiple HARQ buffers.

The MAC layer processing unit 15 identifies (selects or determines) the PDCCH subframe. The MAC layer processing unit 15 performs the DRX process, based on the PDCCH subframe. The MAC layer processing unit 15 manages the timers associated with the DRX, based on the PDCCH subframe. The MAC layer processing unit 15 instructs the radio transmission/reception unit 10 to monitor PDCCHs in subframes. Monitoring PDCCHs refers to an attempt to decode the PDCCHs in accordance with to a given DCI format.

The radio resource control layer processing unit 16 in the higher layer processing unit 14 performs the processing of the Radio Resource Control layer. The radio resource control layer processing unit 16 manages the various types of configuration information/parameters of the terminal device terminal 1. The radio resource control layer processing unit 16 sets the various types of configuration information/parameters, based on the RRC layer signal received from the base station device 3. In other words, the radio resource control layer processing unit 16 sets the various types of configuration information/parameters, based on the information indicating the various types of configuration information/parameters received from the base station device 3.

The radio transmission/reception unit 10 performs the processing of the physical layer, such as modulation, demodulation, coding, and decoding. The radio transmission/reception unit 10 demultiplexes, demodulates, and decodes a signal received from the base station device 3, and outputs the information resulting from the decoding to the higher layer processing unit 14. The radio transmission/reception unit 10 modulates and codes data to create a transmit signal, and transmits the transmit signal to the base station device 3.

The RF unit 12 converts (down-converts) a signal received through the antenna unit 11 into a baseband signal by orthogonal demodulation and removes unnecessary frequency components. The RF unit 12 outputs the processed analog signal to the baseband unit.

The baseband unit 13 converts the analog signal input from the RF unit 12 into a digital signal. The baseband unit 13 removes a portion corresponding to a Cyclic Prefix (CP) from the digital signal resulting from the conversion, performs Fast Fourier Transform (FFT) on the signal from which the CP has been removed, and extracts a signal in the frequency domain.

The baseband unit 13 performs Inverse Fast Fourier Transform (IFFT) on data to create an SC-FDMA symbol, attaches a CP to the created SC-FDMA symbol, creates a digital signal in a baseband, and converts the digital signal in the baseband into an analog signal. The baseband unit 13 outputs the analog signal resulting from the conversion, to the RF unit 12.

The RF unit 12 removes unnecessary frequency components from the analog signal input from the baseband unit 13 using a low-pass filter, up-converts the analog signal into a signal of a carrier frequency, and transmits the up-converted signal via the antenna unit 11. The RF unit 12 amplifies the power. Further, the RF unit 12 may include the functionality for controlling the transmit power. The RF unit 12 is also referred to as a transmit power control unit.

FIG. 17 is a schematic block diagram illustrating the structure of the base station device 3 according to the present embodiment. As illustrated in the figure, the base station device 3 includes a radio transmission/reception unit 30 and a higher layer processing unit 34. The radio transmission/reception unit 30 includes an antenna unit 31, an RF unit 32, and a baseband unit 33. The higher layer processing unit 34 includes a MAC layer processing unit 35 and a radio resource control layer processing unit 36. The radio transmission/reception unit 30 is also referred to as a transmission unit, a reception unit, or a physical layer processing unit.

The higher layer processing unit 34 performs processing of the medium access control (MAC) layer, the packet data convergence protocol (PDCP) layer, the radio link control (RLC) layer, and the radio resource control (RRC) layer.

The MAC layer processing unit 35 in the higher layer processing unit 34 performs the processing of the MAC layer. The MAC layer processing unit 15 controls the HARQ based on various types of configuration information/parameters managed by the radio resource control layer processing unit 16. The MAC layer processing unit 15 creates an ACK/NACK and HARQ information for the uplink data (UL-SCH). The ACK/NACK and HARQ information for the uplink data (UL-SCH) are transmitted to the terminal device 1 on the PHICH or PDCCH.

The radio resource control layer processing unit 36 included in the higher layer processing unit 34 performs the processing of the Radio Resource Control layer. The radio resource control layer processing unit 36 creates or acquires, from a higher node, downlink data (transport block) arranged on a physical downlink shared channel, system information, an RRC message, a MAC Control Element (CE), and the like, and outputs the created or acquired data to the radio transmission/reception unit 30. Furthermore, the radio resource control layer processing unit 36 manages various types of configuration information/parameters for each of the terminal devices 1. The radio resource control layer processing unit 36 may set the various types of configuration information/parameters for each of the terminal devices 1 via a higher layer signal. In other words, the radio resource control layer processing unit 36 transmits/broadcasts information indicating the various types of configuration information/parameters.

The functionality of the radio transmission/reception unit 30 is similar to the functionality of the radio transmission/reception unit 10, and hence description thereof is omitted.

Hereinafter, various aspects of the terminal device and the base station device will be described according to the present embodiment.
(1) A terminal device according to the present embodiment serves as a terminal device configured to communicate, on multiple serving cells including one primary cell and one secondary cell, with the base station device. The terminal device includes: a reception unit configured to receive RRC layer information indicating an asynchronous HARQ; a MAC layer processing unit configured to manage a first HARQ process related to the primary cell and a second HARQ process related to the secondary cell; and a transmission unit configured to transmit MAC layer data in accordance with the instructions from the first HARQ process and the second HARQ process. The MAC layer processing unit, regardless of whether the RRC layer information indicating the asynchronous HARQ is configured, instructs the first uplink HARQ process to always execute a synchronous HARQ; and instructs the second uplink HARQ process to execute the synchronous HARQ or the asynchronous HARQ, based on whether the RRC layer information indicating the asynchronous HARQ is configured.
(2) A base station device according to the present embodiment serves as a base station device configured to communicate, on multiple serving cells including one primary cell and one secondary cell, with the terminal device. The base station device includes: a transmission unit configured to transmit RRC layer information indicating an asynchronous HARQ; a MAC layer processing unit configured to manage a first HARQ process related to the primary cell and a second HARQ process related to the secondary cell; and a reception unit configured to receive the MAC layer data in accordance with instructions from the first HARQ process and the second HARQ process. The MAC layer processing unit, regardless of whether the RRC layer information indicating the asynchronous HARQ is configured for the terminal device, instructs the first uplink HARQ process to always execute the synchronous HARQ; and instructs the second uplink HARQ process to execute the synchronous HARQ or the asynchronous HARQ, based on whether the RRC layer information indicating the asynchronous HARQ is configured for the terminal device.
(3) In the present embodiment, the primary cell serves as a cell on which the terminal device has performed an initial connection establishment procedure, a cell on which the terminal device has initiated a connection re-establishment procedure, or a cell indicated as the primary cell in a handover procedure.
(4) A terminal device according to the present embodiment includes: a reception unit configured to receive RRC layer information indicating an asynchronous HARQ, and an uplink grant; and a transmission unit configured to transmit MAC layer data in accordance with the uplink grant on a secondary cell. Regardless of whether the RRC layer information indicating the asynchronous HARQ is configured, a synchronous HARQ is always applied to the MAC layer data corresponding to the uplink grant received on a physical downlink control channel including CRC parity bits scrambled by a Temporary C-RNTI. Which one of the synchronous HARQ or the asynchronous HARQ is applied to the MAC layer data corresponding to the uplink grant received on the physical downlink control channel including CRC parity bits scrambled by the C-RNTI is determined based on whether the RRC layer information indicating that the asynchronous HARQ is configured.
(5) A base station device according to the present embodiment includes: a transmission unit configured to transmit RRC layer information indicating an asynchronous HARQ, and an uplink grant; and a reception unit configured to receive MAC layer data in accordance with the uplink grant on a secondary cell. Regardless of whether the RRC layer information indicating the asynchronous HARQ is configured for a terminal device, a synchronous HARQ is always applied to the MAC layer data corresponding to the uplink grant transmitted on a physical downlink control channel including CRC parity bits scrambled by a Temporary C-RNTI. Which one of the synchronous HARQ or the asynchronous HARQ is applied to the MAC layer data corresponding to the uplink grant transmitted on the physical downlink control channel including CRC parity bits scrambled by a C-RNTI in the terminal device is determined based on whether the RRC layer information indicating that the asynchronous HARQ is configured for the terminal device.
(6) In the present embodiment, regardless of whether the RRC layer information indicating the asynchronous HARQ is configured for the terminal device, the synchronous HARQ is always applied to the MAC layer data corresponding to the uplink grant included in the random access response related to the contention based random access procedure.
(7) In the present embodiment, whether the synchronous HARQ or the asynchronous HARQ is applied to the MAC layer data corresponding to the uplink grant included in the random access response related to the non-contention based random access procedure is determined based on whether the RRC layer information indicating the asynchronous HARQ is configured for the terminal device.
(8) In the terminal device according to the present embodiment, regardless of whether the RRC layer information indicating the asynchronous HARQ is configured for the terminal device, the synchronous HARQ is always applied to the MAC layer data corresponding to the uplink grant received on the physical downlink control channel including CRC parity bits scrambled by the SPS C-RNTI.
(9) A terminal device according to the present embodiment includes: a reception unit configured to receive RRC layer information indicating an asynchronous HARQ; and a transmission unit configured to transmit MAC layer data in accordance with an uplink grant received on a physical downlink control channel including CRC parity bits scrambled by a C-RNTI. Regardless of whether the RRC layer information indicating the asynchronous HARQ is configured, a synchronous HARQ is always applied to the MAC layer data transmission corresponding to the uplink grant received on the physical downlink control channel in a first search space. Which one of the synchronous HARQ or the asynchronous HARQ is applied to the MAC layer data transmission corresponding to the uplink grant received on the physical downlink control channel in a second search space is determined based on whether the RRC layer information indicating the asynchronous HARQ is configured.
(10) A base station device according to the present embodiment includes: a transmission unit configured to transmit RRC layer information indicating an asynchronous HARQ; and a reception unit configured to receive MAC layer data in accordance with an uplink grant transmitted on a physical downlink control channel including CRC parity bits scrambled by a C-RNTI. Regardless of whether the RRC layer information indicating the asynchronous HARQ is configured for a terminal device, a synchronous HARQ is always applied to the MAC layer data transmission corresponding to the uplink grant transmitted on a physical downlink control channel in a first search space. Which one of the synchronous HARQ or the asynchronous HARQ is applied to the MAC layer data reception corresponding to the uplink grant transmitted on the physical downlink control channel in a second search space is determined based on whether the RRC layer information indicating the asynchronous HARQ is configured for the terminal device.
(11) In the present embodiment, the first search space serves as a Common Search Space (CSS), and the second search space serves as a UE-specific Search Space (USS) given by the C-RNTI.
(12) A terminal device according to the present embodiment includes: a reception unit configured to receive RRC layer information indicating an asynchronous HARQ for a secondary cell, and a first random access response which is a random access response including fields for indicating an uplink grant and a Temporary C-RNTI and is related to a non-contention based random access procedure on a secondary cell; a transmission unit configured to transmit MAC layer data; and a MAC layer processing unit configured to manage multiple HARQ processes and deliver the uplink grant to a HARQ process which instructs the transmission unit to transmit the MAC layer data in accordance with the uplink grant. In a case that the RRC layer information indicating the asynchronous HARQ is configured, the HARQ process to which the uplink grant included in the first random access response is delivered is determined from a value of the field for indicating the Temporary C-RNTI included in the first random access response.
(13) In the terminal device according to the present embodiment, in a case that the RRC layer information indicating the asynchronous HARQ is not configured, the HARQ process to which the uplink grant included in the first random access response is delivered is determined from the subframe in which the first random access response has been received.
(14) In the terminal device according to the present embodiment, the reception unit receives a second random access response related to the contention based random access procedure on the secondary cell. Regardless of whether the RRC layer information indicating the asynchronous HARQ is configured, the HARQ process to which the uplink grant included in the second random access response is delivered is determined from the subframe in which the second random access response has been received.
(15) A base station device according to the present embodiment includes: a transmission unit configured to transmit RRC layer information indicating an asynchronous HARQ for a secondary cell, and a first random access response which serves as a random access response including fields for indicating an uplink grant and a Temporary C-RNTI and is related to a non-contention based random access procedure on a secondary cell; a reception unit configured to receive MAC layer data; and a MAC layer processing unit configured to manage multiple HARQ processes. In a case that the RRC layer information indicating the asynchronous HARQ is configured for a terminal device, a value of the field for indicating the Temporary C-RNTI included in the first random access response indicates a HARQ process related to the uplink grant included in the first random access response.
(16) In the base station device according to the present embodiment, in a case that the RRC layer information indicating the asynchronous HARQ is not configured for the terminal device, the HARQ process related to the uplink grant included in the first random access response is associated with the subframe in which the first random access response has been transmitted.
(17) In the base station device according to the present embodiment, the transmission unit transmits the second random access response related to a contention based random access procedure on the secondary cell. Regardless of whether the RRC layer information indicating the asynchronous HARQ is configured, the HARQ process related to the uplink grant included in the second random access response is associated with the subframe in which the second random access response has been transmitted.
(18) A terminal device according to the present embodiment includes: a reception unit configured to receive RRC layer information indicating an asynchronous HARQ; a transmission unit configured to transmit MAC layer data; and a MAC layer processing unit configured to deliver an uplink grant to a HARQ process instructing the transmission unit to transmit the MAC layer data in accordance with the uplink grant. Regardless of whether the RRC layer information indicating the asynchronous HARQ is configured, the HARQ process to which the uplink grant received on a physical downlink control channel including CRC parity bits scrambled by a Temporary C-RNTI is delivered is determined from a subframe in which the uplink grant has been received on the physical downlink control channel including CRC parity bits scrambled by the Temporary C-RNTI. Whether the HARQ process for delivering the uplink grant, received on the physical downlink control channel including CRC parity bits scrambled by the C-RNTI, is determined from either the HARQ information, received on the physical downlink control channel including CRC parity bits scrambled by the C-RNTI, or the subframe in which the uplink grant has been received on the physical downlink control channel including CRC parity bits scrambled by the C-RNTI is determined, based on whether the RRC layer information indicating the asynchronous HARQ is configured.
(19) In the terminal device according to the present embodiment, regardless of whether the RRC layer information indicating the asynchronous HARQ is configured, the HARQ process to which the uplink grant included in the random access response related to the contention based random access procedure is delivered is determined from the number of a subframe in which the random access response has been received.
(20) In the terminal device according to the present embodiment, whether the HARQ process to which the uplink grant included in the random access response related to the non-contention based random access procedure is delivered is determined from either the information included in the random access response or the subframe in which the uplink grant has been received on the physical downlink control channel including CRC parity bits scrambled by the C-RNTI is determined based on whether the RRC layer information indicating the asynchronous HARQ is configured.
(21) In the terminal device according to the present embodiment, regardless of whether the RRC layer information indicating the asynchronous HARQ is configured, the HARQ process to which the uplink grant received on the physical downlink control channel including CRC parity bits scrambled by the SPS C-RNTI is delivered is determined from the subframe in which the uplink grant has been received on the physical downlink control channel including CRC parity bits scrambled by the SPS C-RNTI.
(22) A base station device according to the present embodiment includes: a transmission unit configured to transmit RRC layer information indicating an asynchronous HARQ and an uplink grant; a reception unit configured to receive MAC layer data; and a MAC layer processing unit configured to deliver an uplink grant to a HARQ process instructing the transmission unit to transmit the MAC layer data in accordance with to the uplink grant. Regardless of whether the RRC layer information indicating the asynchronous HARQ is configured for the terminal device, the HARQ process related to the uplink grant transmitted on a physical downlink control channel including CRC parity bits scrambled by a Temporary C-RNTI is associated with a subframe in which the uplink grant has been transmitted on the physical downlink control channel including CRC parity bits scrambled by the Temporary C-RNTI. Whether the HARQ process to which the uplink grant transmitted on the physical downlink control channel including CRC parity bits scrambled by a C-RNTI is delivered is indicated by HARQ information transmitted on the physical downlink control channel including CRC parity bits scrambled by the C-RNTI or is associated with the subframe in which the uplink grant has been transmitted on the physical downlink control channel including CRC parity bits scrambled by the C-RNTI is determined based on whether the RRC layer information indicating the asynchronous HARQ is configured for the terminal device.
(23) In the base station device according to the present embodiment, regardless of whether the RRC layer information indicating the asynchronous HARQ is configured for the terminal device, the HARQ process corresponding to the uplink grant included in the random access response related to the contention based random access procedure is associated with the subframe in which the random access response has been transmitted.
(24) In the base station device according to the present embodiment, whether the HARQ process related to the uplink grant included in the random access response related to the non-contention based random access procedure is indicated by the information included in the random access response or is associated with the subframe in which the uplink grant has been transmitted on the physical downlink control channel including CRC parity bits scrambled by the C-RNTI is determined based on whether the RRC layer information indicating the asynchronous HARQ is configured.
(25) In the base station device according to the present embodiment, regardless of whether the RRC layer information indicating the asynchronous HARQ is configured for the terminal device, the HARQ process related to the uplink grant transmitted on the physical downlink control channel including CRC parity bits scrambled by an SPS C-RNTI is associated with the subframe in which the uplink grant has been transmitted on the physical downlink control channel including CRC parity bits scrambled by the SPS C-RNTI.
(26) A terminal device according to the present embodiment includes: a reception unit configured to receive an uplink grant on a physical downlink control channel including CRC parity bits scrambled by a C-RNTI; a transmission unit configured to transmit MAC layer data; and a MAC layer processing unit configured to deliver the uplink grant to a HARQ process which instructs the transmission unit to transmit the MAC layer data in accordance with the uplink grant. Regardless of whether RRC layer information indicating an asynchronous HARQ is configured, the HARQ process to which the uplink grant received on the physical downlink control channel in a first search space is delivered is determined from a subframe in which the uplink grant has been received on the physical downlink control channel in the first search space; and whether the HARQ process to which the uplink grant received on the physical downlink control channel in a second search space is delivered is determined from either the HARQ information received on the physical downlink control channel in the second search space or the subframe in which the uplink grant has been received on the physical downlink control channel in the second search space based on whether the RRC layer information indicating the asynchronous HARQ is configured.
(27) A base station device according to the present embodiment includes: a transmission unit configured to transmit an uplink grant on a physical downlink control channel including CRC parity bits scramble with a C-RNTI; a reception unit configured to receive MAC layer data; and a MAC layer processing unit configured to manage multiple HARQ processes. Regardless of whether RRC layer information indicating an asynchronous HARQ is configured for a terminal device, a HARQ process related to the uplink grant transmitted on the physical downlink control channel in a first search space is associated with a subframe in which the uplink grant has been transmitted on the physical downlink control channel in the first search space. Whether the HARQ process related to the uplink grant transmitted on the physical downlink control channel in a second search space is indicated by the HARQ information transmitted on the physical downlink control channel in the second search space or is associated with the subframe in which the uplink grant has been transmitted on the physical downlink control channel in the second search space is determined based on whether the RRC layer information indicating the asynchronous HARQ is configured in the terminal device.
(28) A terminal device according to the present embodiment includes: a reception unit configured to receive an RRC layer parameter indicating a synchronous HARQ or an asynchronous HARQ to a secondary cell; a MAC layer processing unit configured to apply the synchronous HARQ or the asynchronous HARQ to MAC layer data transmission on the secondary cell based on the RRC layer parameter; and multiple HARQ buffers configured to store the MAC layer data. The HARQ control unit, in a case that the RRC layer parameter is modified/reconfigured/released, flushes a HARQ buffer related to the secondary cell of the multiple HARQ buffers.
(29) A terminal device according to the present embodiment includes: a reception unit configured to receive an RRC layer parameter indicating a synchronous HARQ or an asynchronous HARQ to a secondary cell; a MAC layer processing unit configured to apply the synchronous HARQ or the asynchronous HARQ to MAC layer data transmission on the secondary cell based on the RRC layer parameter. The MAC layer processing unit manages a HARQ process related to the MAC layer data transmitted on the secondary cell, and sets an NDI for the HARQ process to 0, in a case that the RRC layer parameter is modified/reconfigured.
(30) A terminal device according to the present embodiment includes: a reception unit configured to receive a RRC layer parameter indicating a synchronous HARQ or an asynchronous HARQ to a secondary cell; and a MAC layer processing unit configured to apply the synchronous HARQ or the asynchronous HARQ to MAC layer data transmission on the secondary cell based on the RRC layer parameter. The MAC layer processing unit manages a HARQ process related to the MAC layer data transmitted on the secondary cell, and determines a next transmission related to the HARQ process as an initial transmission, in a case that the RRC layer parameter is modified/reconfigured.
(31) A terminal device according to the present embodiment includes: a reception unit configured to receive a RRC layer parameter indicating a synchronous HARQ or an asynchronous HARQ to a secondary cell; and a MAC layer processing unit configured to apply the synchronous HARQ or the asynchronous HARQ to MAC layer data transmission on the secondary cell based on the RRC layer parameter. The MAC layer processing unit includes a HARQ entity which manages multiple HARQ processes related to the MAC layer data on the secondary cell, and initializes the HARQ entity, in a case that the RRC layer parameter is modified/reconfigured.
(32) A terminal device according to the present embodiment is a terminal device configured to perform discontinuous reception. The terminal device includes: a reception unit configured to monitor a physical downlink control channel; and a MAC layer processing unit configured to control a Hybrid Automatic Repeat reQuest (HARQ) process, related to the uplink transmission, to which a synchronous HARQ or an asynchronous HARQ is applied, a HARQ Round Trip Time (RTT) timer for the HARQ process, a first timer for the HARQ process, and a buffer associated with the HARQ process. The terminal device starts a first timer for each subframe in a case that the HARQ RTT timer expires in a given subframe and a HARQ buffer is not empty; monitors a physical downlink control channel during the Active Time including a period in which the first timer is running; and starts the HARQ RTT timer for each subframe in a case that the physical downlink control channel indicates the uplink transmission and the asynchronous HARQ is applied to the HARQ process.
(33) The terminal device according to the present embodiment starts the first timer for each subframe, in a case that the asynchronous HARQ is applied to the HARQ process, the HARQ RTT timer expires in the given subframe, and the HARQ buffer is not empty.
(34) The terminal device according to the present embodiment does not start the first timer for each subframe, in a case that the HARQ RTT timer expires in the given subframe and the HARQ buffer is empty.
(35) The terminal device according to the present embodiment does not start the HARQ RTT timer for each subframe, in a case that the physical downlink control channel indicates the uplink transmission and the synchronous HARQ is applied to the HARQ process.
(36) The terminal device according to the present embodiment starts a second timer for the HARQ process and flushes the HARQ buffer based on the expiration of the second timer, in a case that the physical downlink control channel indicates the initial transmission in the uplink.
(37) The terminal device according to the present embodiment starts the second timer for the HARQ process and flashes the HARQ buffer based on the expiration of the second timer, in a case that the HARQ process receives a request for the uplink initial transmission.

This configuration enables the terminal device 1 to efficiently communicate with the base station device 3.

A program running on each of the base station device 3 and the terminal device 1 according to the present invention may serve as a program that controls a Central Processing Unit (CPU) and the like (a program for causing a computer to operate) in such a manner as to enable the functionalities according to the above-described embodiment of the present invention. The information handled in these devices is temporarily stored in a Random Access Memory (RAM) while being processed. Then, the information is stored in various types of Read Only Memory (ROM) such as a Flash ROM and a Hard Disk Drive (HDD) and is read out by the CPU to be modified or rewritten, when necessary.

Moreover, the terminal device 1 and the base station device 3 according to the above-described embodiment may be partially achieved by a computer. This configuration may be achieved by recording a program for enabling such control functionalities on a computer-readable recording medium and causing a computer system to read the program recorded on the recording medium for execution.

Note that it is assumed that the "computer system" refers to a computer system built into the terminal device 1 or the base station device 3, and the computer system includes an OS and hardware components such as a peripheral device. Furthermore, the "computer-readable recording medium" refers to a portable medium such as a flexible disk, a magneto-optical disk, a ROM, and a CD-ROM, and a storage device such as a hard disk built into the computer system.

Moreover, the "computer-readable recording medium" may include a medium that dynamically retains the program for a short period of time, such as a communication line that is used to transmit the program over a network such as the Internet or over a communication circuit such as a telephone circuit, and a medium that retains, in that case, the program for a fixed period of time, such as a volatile memory within the computer system that functions as a server or a client. Furthermore, the program may be configured to enable some of the functionalities described above, and also may be configured to enable the functionalities described above in combination with a program already recorded in the computer system.

Furthermore, the base station device 3 according to the above-described embodiment is achieved as an aggregation (a device group) constituted of multiple devices. Devices constituting such a device group may be each equipped with some or all portions of each function or each functional block of the base station device 3 according to the above-described embodiment. The device group may include at least general functionalities or general functional blocks of the base station device 3. Furthermore, the terminal device 1 according to the above-described embodiment is capable of communicating with the base station device as the aggregation.

Furthermore, the base station device 3 according to the above-described embodiment may serve as an Evolved Universal Terrestrial Radio Access Network (EUTRAN). Furthermore, the base station device 3 according to the above-described embodiment may have some or all portions of the functionalities of a node higher than an eNodeB.

Furthermore, some or all portions of each of the terminal device 1 and the base station device 3 according to the above-described embodiment may be achieved as an LSI which is a typical integrated circuit or may be achieved as a chip set. The functional blocks of each of the terminal device 1 and the base station device 3 may be individually achieved as a chip, or some or all of the functional blocks may be integrated into a chip. Furthermore, the circuit integration technique is not limited to the LSI, and the integrated circuit may be achieved with a dedicated circuit or a general-purpose processor. Furthermore, in a case that advances in semiconductor technology generates a circuit integration technology which replaces the LSI, an integrated circuit based on such a circuit integration technology may be applicable.

Furthermore, according to the above-described embodiment, the terminal device is described as an example of a communication device, but the present invention is not limited to such a terminal device, and is applicable to a terminal device or a communication device of a fixed-type or a stationary-type electronic apparatus installed indoors or outdoors, for example, such as an audio-video (AV) apparatus, a kitchen apparatus, a cleaning or washing machine, an air-conditioning apparatus, office equipment, a vending machine, and other household apparatuses.

The embodiments of the present invention have been described in detail above with reference to the drawings, but the specific configuration is not limited to the above embodiments, and includes, for example, design variations within the scope that does not depart from the gist of the present invention. Furthermore, various modifications are possible within the scope of the present invention defined by claims, and embodiments that are made by suitably combining technical means disclosed according to the different embodiments are also included in the technical scope of the present invention. Furthermore, any configuration in which a constituent element that achieves the same effect is substituted for the one that is described according to the embodiment is also included in the technical scope of the present invention.

### DESCRIPTION OF REFERENCE NUMERALS

1 (1 A, 1 B, 1C) Terminal device
3 Base station device
10 Radio transmission/reception unit
11 Antenna unit
12 RF unit
13 Baseband unit
14 Higher layer processing unit
15 MAC layer processing unit
16 Radio resource control layer processing unit
30 Radio transmission/reception unit
31 Antenna unit
32 RF unit
33 Baseband unit
34 Higher layer processing unit
35 MAC layer processing unit
36 Radio resource control layer processing unit

## Claims

1. A terminal device configured to perform discontinuous reception, the terminal device comprising:
a reception unit configured to monitor a physical downlink control channel; and
a Medium Access Control layer processing unit configured to control a first Hybrid Automatic Repeat reQuest (HARQ) process related to uplink transmission, a second HARQ process related to downlink transmission, a first HARQ Round Trip Time (RTT) timer for the first HARQ process, a second HARQ RTT timer for the second HARQ process, a first retransmission timer for the first HARQ process, and a second retransmission timer for the second HARQ process,
wherein an asynchronous HARQ is applied to the first HARQ process and the second HARQ process, and
wherein for each subframe, the terminal device:
starts the first retransmission timer irrespective of whether data of the first HARQ process is successfully decoded, in a case that the first HARQ RTT timer expires in a given subframe;
starts the second retransmission timer in a case that the second HARQ RTT timer expires in a given subframe and data of the second HARQ process is not successfully decoded; and
monitors the physical downlink control channel during an Active Time including a period in which either the first retransmission timer or the second retransmission timer is running.

2. A communicating method for a terminal device configured to perform discontinuous reception, the communicating method comprising the steps of:
monitoring a physical downlink control channel; and
controlling a first Hybrid Automatic Repeat reQuest (HARQ) process related to uplink transmission, a second HARQ process related to downlink transmission, a first HARQ Round Trip Time (RTT) timer for the first HARQ process, a second HARQ RTT timer for the second HARQ process, a first retransmission timer for the first HARQ process, and a second retransmission timer for the second HARQ process,
wherein an asynchronous HARQ is applied to the first HARQ process and the second HARQ process, and
wherein for each subframe:
the first retransmission timer is started irrespective of whether data of the first HARQ process is successfully decoded, in a case that the first HARQ RTT timer expires in a given subframe;
the second retransmission timer is started in a case that the second HARQ RTT timer expires in a given subframe and data of the second HARQ process is not successfully decoded; and
the physical downlink control channel is monitored during an Active Time including a period in which either the first retransmission timer or the second retransmission timer is running.

3. An integrated circuit mounted on a terminal device configured to perform discontinuous reception, the integrated circuit comprising:
a reception circuit configured monitor a physical downlink control channel; and
a MAC layer processing circuit configured to control a first Hybrid Automatic Repeat reQuest (HARQ) process related to uplink transmission, a second HARQ process related to downlink transmission, a first HARQ Round Trip Time (RTT) timer for the first HARQ process, a second HARQ RTT timer for the second HARQ process, a first retransmission timer for the first HARQ process, and a second retransmission timer for the second HARQ process,
wherein an asynchronous HARQ is applied to the first HARQ process and the second HARQ process, and
wherein for each subframe:
the first retransmission timer is started irrespective of whether data of the first HARQ process is successfully decoded, in a case that the first HARQ RTT timer expires in a given subframe;
the second retransmission timer is started in a case that the second HARQ RTT timer expires in a given subframe and data of the second HARQ process is not successfully decoded; and
the physical downlink control channel is monitored during an Active Time including a period in which either the first retransmission timer or the second retransmission timer is running.
